# EUROPEAN PATENT APPLICATION

(11) **EP 3 050 604 A1**
(43) Date of publication of application: **03.08.2016**
(21) Application number: 16161003.5
(22) Date of filing: 06.01.2014
(51) Int. Cl.: A63F 13/20, A63F 13/30, A63F 13/40, G09B 5/06

(54) **LOCATION BASED AUGMENTATION FOR STORY READING**

(30) Priority: 07.01.2013 US 201313735850
(62) Divisional of application: 14704407.7
(71) Applicant: Microsoft Technology Licensing, LLC, Redmond, WA 98052 (US)
(72) Inventor: PEEVERS, Alan W., Redmond, WA Washington 98052-6399 (US); TANG, John C., Redmond, WA Washington 98052-6399 (US); GOK, Nizamenttin, Redmond, WA Washington 98052-6399 (US); VENOLIA, Gina Danielle, Redmond, VT Vermont 98052-6399 (US); QUINN, Kori Inkpen, Redmond, WA Washington 98052-6399 (US); KHANNA, Nitin, Redmond, WA Washington 98052-6399 (US); LONGBOTTOM, Simon Andrew, Redmond, WA Washington 98052-6399 (US); THYWISSEN, Kurt A., Redmond, WA Washington 98052-6399 (US)
(74) Representative: Driver, Virginia Rozanne

(57) **Abstract**

Various embodiments provide an interactive, shared, story-reading experience in which stories can be experienced from remote locations. Various embodiments enable augmentation or modification of audio and/or video associated with the story-reading experience. This can include augmentation and modification of a reader's voice, face, and/or other content associated with the story as the story is read.

## Description

### BACKGROUND

Reading stories remotely, such as over a computer network, has the potential to be a very personal experience. For example, a parent who is traveling on business can read their child's favorite bedtime story to their child so as to not miss out on tucking their child in. To date, however, when this is done remotely, the experience has been limited by the fact that the story is all that is shared or, at best, the story plus additional video, as in a peer-to-peer call. In addition, the shared experience is mostly one-way, from the reader to the listener, where the reader conveys emotion separately from the story.

### SUMMARY

This Summary is provided to introduce a selection of concepts in a simplified form that are further described below in the Detailed Description. This Summary is not intended to identify key features or essential features of the claimed subject matter.

Various embodiments provide an interactive, shared, story-reading experience in which stories can be experienced from remote locations. Various embodiments enable augmentation or modification of audio and/or video associated with the story-reading experience. This can include augmentation and modification of a reader's voice, face, and/or other content associated with the story as the story is read.

In this manner, two or more remote participants can communicate and interact with story-based shared, interactive content in real-time. Alternately or additionally, story-based shared, interactive content can be augmented or modified and be recorded and/or archived for subsequent playback.

### BRIEF DESCRIPTION OF THE DRAWINGS

The detailed description is described with reference to the accompanying figures. In the figures, the left-most digit(s) of a reference number identifies the figure in which the reference number first appears. The use of the same reference numbers in different instances in the description and the figures may indicate similar or identical items.
FIG. 1 is an illustration of an environment in an example implementation in accordance with one or more embodiments.
FIG. 2 is an illustration of an environment in an example implementation in accordance with one or more embodiments.
FIG. 3 is an illustration of an example augmentation effect module in accordance with one or more embodiments.
FIG. 4 illustrates a flow diagram in accordance with one or more embodiments.
FIG. 5 illustrates a flow diagram in accordance with one or more embodiments.
FIG. 6 illustrates a flow diagram in accordance with one or more embodiments.
FIG 7 illustrates an example user interface in accordance with one or more embodiments.
FIG. 8 illustrates an example user interface in accordance with one or more embodiments.
FIG. 9 illustrates a flow diagram in accordance with one or more embodiments.
FIG. 10 illustrates a flow diagram in accordance with one or more embodiments.
FIG. 11 illustrates a flow diagram in accordance with one or more embodiments.
FIG. 12 illustrates a flow diagram in accordance with one or more embodiments.
FIG. 13 illustrates a flow diagram in accordance with one or more embodiments.
FIG. 14 illustrates an example system in accordance with one or more embodiments.
FIG. 15 illustrates an example system in accordance with one or more embodiments.
FIG. 16 illustrates aspects of one or more embodiments.
FIG. 17 illustrates aspects of one or more embodiments.
FIG. 18 illustrates aspects of one or more embodiments.
FIG. 19 illustrates aspects of one or more embodiments.
FIG. 20 illustrates a flow diagram in accordance with one or more embodiments.
FIG. 21 illustrates an example computing device that can be utilized to implement various embodiments described herein.

### DETAILED DESCRIPTION

### Overview

Various embodiments provide an interactive, shared, story-reading experience in which stories can be experienced from remote locations. Various embodiments enable augmentation or modification of audio and/or video associated with the story-reading experience. This can include augmentation and modification of a reader's voice, face, and/or other content associated with the story as the story is read. The described embodiments can be utilized in connection with electronic or digital content such as electronic books, termed "e-books". An e-book is a book-length publication in digital form including text, images, or both, and produced on, published through, and readable on computers or other electronic devices. E-books are usually red on dedicated e-book readers or general-purpose tablet computers. Personal computers and mobile phones can also be used to read e-books.

In this manner, two or more remote participants can communicate and interact with story-based shared, interactive content in real-time. Alternately or additionally, story-based shared, interactive content can be augmented or modified and recorded and/or archived for subsequent playback. In various embodiments, participants can enjoy a shared view that also includes user interactions with story content, e.g., if one user touches a picture or traces along words in the content, those actions can be visible to the other participants.

In the discussion that follows, a section entitled "Example Operating Environments" is provided and describes one environment in which one or more embodiments can be employed. Following this, a section entitled "Example Augmentation Effect Module" describes an augmentation effect module in accordance with one or more embodiments. Next, a section entitled "Speech Modification for Distributed Story Reading" describes various embodiments in which speech can be modified in the context of reading a story." Following this, a section entitled "Using Cues to Decide When to Augment Speech" describes various cues that can be used for speech augmentation in accordance with one or more embodiments. Next, a section entitled "Using Touch to Decide When to Augment Speech" describes how touch-based input can be utilized to cause speech augmentation in accordance with one or more embodiments. Following this, a section entitled "Using User Interface Elements to Decide When to Augment Speech" describes how various user interface elements can be used to cause speech augmentation in accordance with one or more embodiments. Next, a section entitled "Using Gestures to Apply Augmentation" describes how various gestures can be utilized in the augmentation process in accordance with one or more embodiments. Following this, a section entitled "Using Story Content to Apply Augmentation" describes how content of a particular story can be used in the augmentation process in accordance with one or more embodiments. Next, a section entitled "Using Story Metadata to Apply Augmentation" describes how metadata associated with the story can be utilized in the augmentation process in accordance with one or more embodiments. Following this, a section entitled "Using Page Numbers and Other Story Structure to Apply Augmentation" describes how page numbers and other story structure can be utilized in the augmentation process in accordance with one or more embodiments. Next, a section entitled "Implementation Examples and Considerations" describes various implementation examples in accordance with one or more embodiments. Following this, a section entitled "Capturing the Shared Story Experience for Subsequent Sharing" describes how a story can be shared in other than real-time in accordance with one or more embodiments. Next, a section entitled "Media Stream Manipulation" describes how a media stream can be manipulated with augmentation effect in accordance with one or more embodiments. Following this, a section entitled "Example Use Scenarios" describes various use scenarios in accordance with one or more embodiments. Last, a section entitled "Example Device" describes an example device that can be utilized to implement one or more embodiments.

Having provided an overview of various embodiments that arc to be described below, consider now some example operating environments in which one or more embodiments can be implemented.

### Example Operating Environments

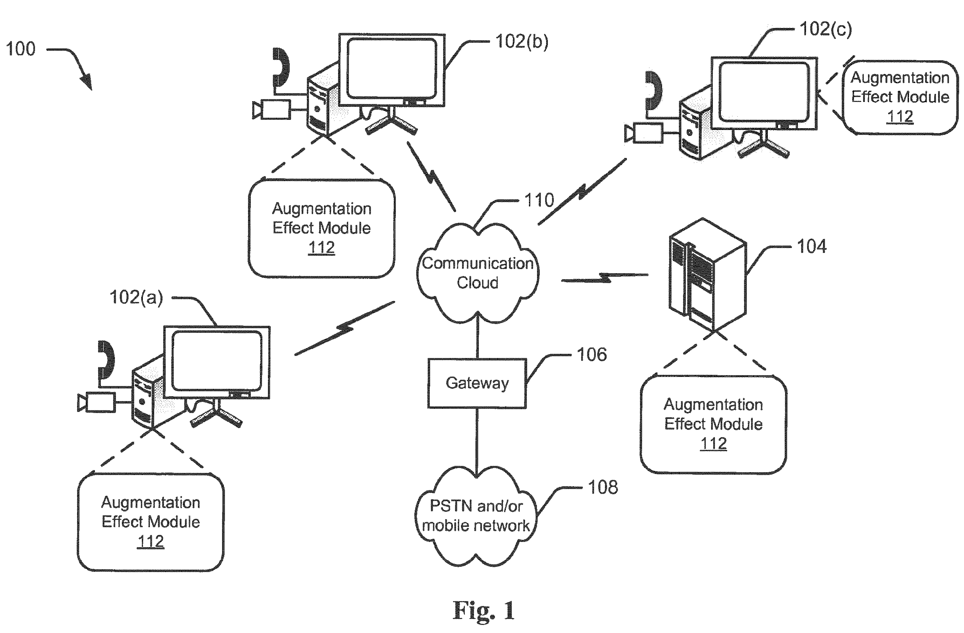

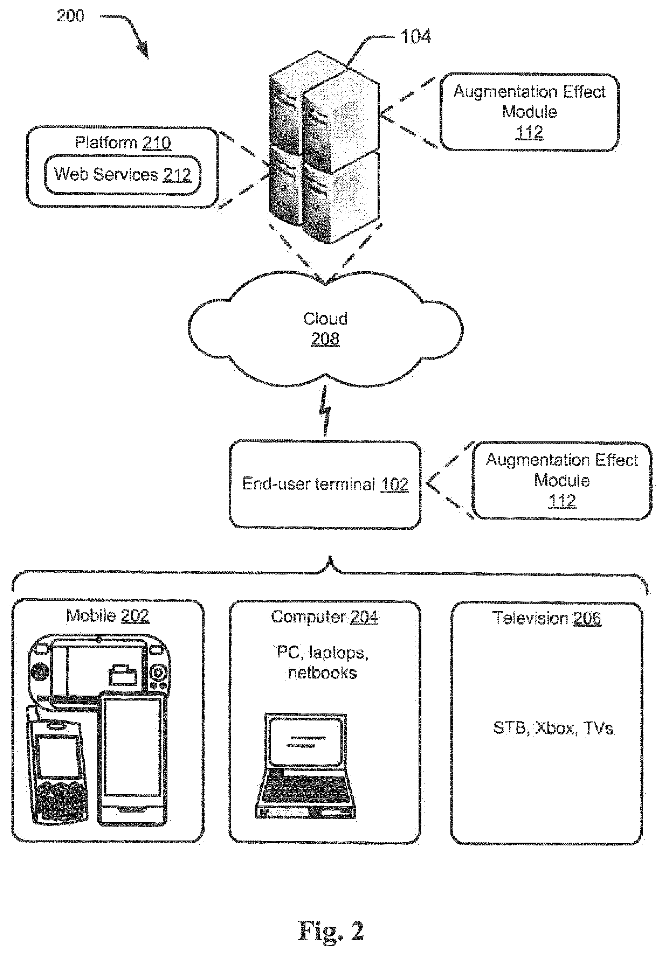

The various embodiments described herein can be implemented in a variety of different environments. FIGS. 1 and 2 illustrate two example environments in which the embodiments can be implemented. It is to be appreciated and understood that other environments can be utilized without departing from the spirit and scope of the claimed subject matter.

FIG. 1 is a schematic illustration of a communication system 100 implemented over a packet-based network, here represented by communication cloud 110 in the form of the Internet, comprising a plurality of interconnected elements. It is to be appreciated that, while aspects of the various embodiments are described with reference to communication system 100, these discussions are merely for illustrative purposes, and are not intended to limit the scope of the claimed subject matter. Each network element is connected to the rest of the Internet, and is configured to communicate data with other such elements over the Internet by transmitting and receiving data in the form of Internet Protocol (IP) packets. Each element also has an associated IP address locating it within the Internet, and cach packet includes a source and one or more destination IP addresses in its header. The elements shown in FIG. 1 include a plurality of end-user terminals 102(a) to 102(c) (such as desktop or laptop PCs or Internet-enabled mobile phones), one or more servers 104 (such as a peer-to-peer server of an Internet-based communication system, and so forth), and a gateway 106 to another type of network 108 (such as to a traditional Public-Switched Telephone Network (PSTN) or other circuit switched network, and/or to a mobile cellular network). However, it will of course be appreciated that many more elements make up the Internet than those explicitly shown. This is represented schematically in FIG. 1 by the communications cloud 110 which typically includes many other end-user terminals, servers and gateways, as well as routers of Internet service providers (ISPs) and Internet backbone routers. In addition, the FIG. 1 system also includes one or more sources of electronic books, examples of which are provided below.

In the illustrated and described embodiment, end-user terminals 102(a) to 102(c) can communicate with one another, as well as other entities, by way of the communication cloud using any suitable techniques. Thus, end-user terminals can communicate with one or more entities through the communication cloud 110 and/or through the communication cloud 110, gateway 106 and network 108 using, for example Voice over Internet Protocol (VoIP). In order to communicate with another end user terminal, a client executing on an initiating end user terminal acquires the IP address of the terminal on which another client is installed. This is typically done using an address look-up.

Some Internet-based communication systems are managed by an operator, in that they rely on one or more centralized, operator-run servers for address look-up (not shown). In that case, when one client is to communicate with another, then the initiating client contacts a centralized server run by the system operator to obtain the callee's IP address.

In contrast to these operator managed systems, another type of Internet-based communication system is known as a "peer-to-peer" (P2P) system. Peer-to-peer (P2P) systems typically devolve responsibility away from centralized operator servers and into the end-users' own terminals. This means that responsibility for address look-up is devolved to end-user terminals like those labeled 102(a) to 102(c). Each end user terminal can run a P2P client application, and each such terminal forms a node of the P2P system. P2P address look-up works by distributing a database of IP addresses amongst some of the end user nodes. The database is a list which maps the usernames of all online or recently online users to the relevant IP addresses, such that the IP address can be determined given the username.

Once known, the address allows a user to establish a voice or video call, or send an IM chat message or file transfer, etc. Additionally however, the address may also be used when the client itself needs to autonomously communicate information with another client.

Server(s) 104 represent one or more servers connected to communication system 100, examples of which are provided above and below. For example, servers 104 can include a bank of servers working in concert to achieve a same functionality. Alternately or additionally, servers 104 can include a plurality of independent servers configured to provide functionality specialized from other servers. The servers can serve as a repository for e-books which are typically maintained in an electronic library that is accessible through a URL, as described below in more detail.

In one or more embodiments, individual end user terminals 102(a)-(c) include software in the form of an e-book reader or other suitably-configured application to enable e-books to be read, such as a web browser. The end-user terminals also include an augmentation effect module 112 that can be used to augment effects in connection with the reading of an e-book that is shared amongst one or more other remote participants. Further, in at least some embodiments, server 104 can include an augmentation effect module 112 that can operate as described above and below.

In operation, the augmentation effect module 112 is configured to augment or modify audio and/or video associated with the story-reading experience. This can include augmentation and modification of a reader's voice, face, and/or other content associated with the story, e.g., visual content of the story, as the story is read.

Having considered one example system in which the inventive principles can be utilized, consider now a different example system in which the inventive principles can be utilized.

FIG. 2 illustrates an example system 200 generally showing server(s) 104 and end-user terminal 102 as being implemented in an environment where multiple devices are interconnected through a central computing device. The end user terminal includes augmentation effect module 112 as described above and below. The central computing device may be local to the multiple devices or may be located remotely from the multiple devices. In one embodiment, the central computing device is a "cloud" server farm, which comprises one or more server computers that are connected to the multiple devices through a network or the Internet or other means.

In one embodiment, this interconnection architecture enables functionality to be delivered across multiple devices to provide a common and seamless experience to the user of the multiple devices. Each of the multiple devices may have different physical requirements and capabilities, and the central computing device uses a platform to enable the delivery of an experience to the device that is both tailored to the device and yet common to all devices. In one embodiment, a "class" of target device is created and experiences are tailored to the generic class of devices. A class of device may be defined by physical features or usage or other common characteristics, e.g. CPU performance of the devices. For example, as previously described, end-user terminal 102 may be configured in a variety of different ways, such as for mobile 202, computer 204, and television 206 uses. Each of these configurations has a generally corresponding screen size and thus end-user terminal 102 may be configured as one of these device classes in this example system 200. For instance, the end-user terminal 102 may assume the mobile 202 class of device which includes mobile telephones, music players, game devices, and so on. The end-user terminal 102 may also assume a computer 204 class of device that includes personal computers, laptop computers, netbooks, tablet computers, and so on. The television 206 configuration includes configurations of device that involve display in a casual environment, e.g., televisions, set-top boxes, game consoles, and so on. Thus, the techniques described herein may be supported by these various configurations of the end-user terminal 102 and are not limited to the specific examples described in the following sections.

In some embodiments, server(s) 104 include "cloud" functionality. Here, cloud 208 is illustrated as including a platform 210 for web services 212. The platform 210 abstracts underlying functionality of hardware (e.g., servers) and software resources of the cloud 208 and thus may act as a "cloud operating system." For example, the platform 210 may abstract resources to connect end-user terminal 102 with other computing devices. The platform 210 may also serve to abstract scaling of resources to provide a corresponding level of scale to encountered demand for the web services 212 that are implemented via the platform 210. A variety of other examples are also contemplated, such as load balancing of servers in a server farm, protection against malicious parties (e.g., spam, viruses, and other malware), and so on. Thus, the cloud 208 is included as a part of the strategy that pertains to software and hardware resources that are made available to the end-user terminal 102 via the Internet or other networks.

Alternately or additionally, servers 104 include augmentation effect module 112 as described above and below. In some embodiments, platform 210 and augmentation effect module 112 can reside on a same set of servers, while in other embodiments they reside on separate servers. Here, augmentation effect module 112 is illustrated as utilizing functionality provided by cloud 208 for interconnectivity with end-user terminal 102.

Generally, any of the functions described herein can be implemented using software, firmware, hardware (e.g., fixed logic circuitry), manual processing, or a combination of these implementations. The terms "module," "functionality," and "logic" as used herein generally represent software, firmware, hardware, or a combination thereof. In the case of a software implementation, the module, functionality, or logic represents program code that performs specified tasks when executed on or by a processor (e.g., CPU or CPUs). The program code can be stored in one or more computer readable memory devices. The features described below are platform-independent, meaning that the techniques may be implemented on a variety of commercial computing platforms having a variety of processors.

Having described example operating environments in which various embodiments can be utilized, consider now a discussion of an example augmentation effect module in accordance with one or more embodiments.

### Example Augmentation Effect Module

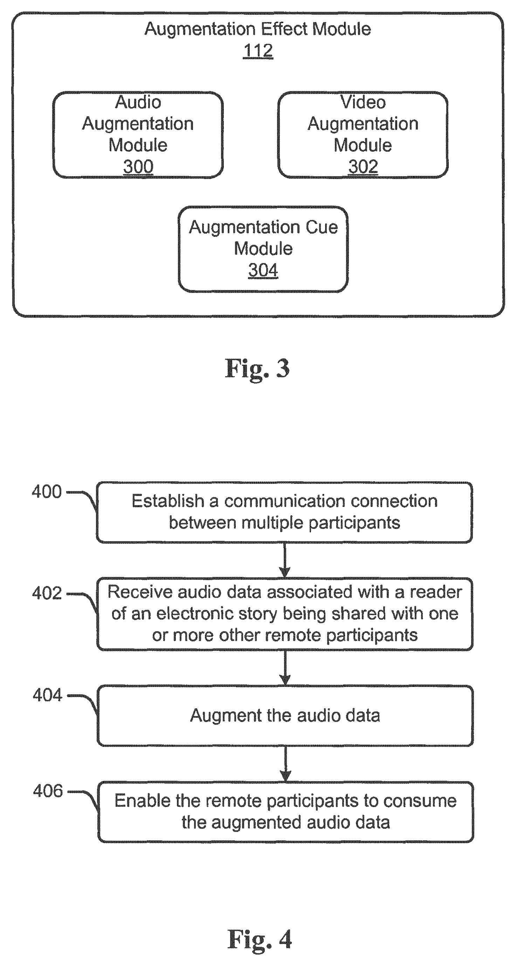

FIG. 3 illustrates an example augmentation effect module 112 in accordance with one or more embodiments. In this particular example, the augmentation effect module 112 includes an audio augmentation module 300, a video augmentation module 302, and an augmentation cue module 304.

In one or more embodiments, the audio augmentation module 300 is configured to enable application of audio effects to a reader's voice, or to other audio aspects, e.g., background sound effects, of a story that is being read. Such effects can include, by way of example and not limitation, voice morphing as a story is read and/or augmenting audio story content as the story is read.

In one or more embodiments, the video augmentation module 302 is configured to enable manipulation of video associated with the story. Specifically, a story may reside in the form of an electronic book having its own associated content. As the story is read, various augmentation effects can be applied to the story's content. For example, face recognition technology can be utilized to capture a facial image of a reader and superimpose the captured facial image onto a character in the story. Alternately or additionally, the captured image can be morphed and/or rotoscoped, as described below in more detail. The audio augmentation module 300 and the video augmentation module 302 can be used individually or together. When used together, the electronic story can have both its audio and video, i.e., visual content, augmented at the same time.

In one or more embodiments, augmentation cue module 304 is configured to enable augmentation effects to be cued as a story is read. The augmentation cue module 304 can perform its function in a variety of different ways. For example, the augmentation cue module 304 can use various means of ascertaining a reader's location within a particular story that is being read. By knowing the reader's location, various augmentation effects can be triggered at appropriate times. The various means of ascertaining a reader's location can include, by way of example and not limitation, speech recognition and tracking, touch inputs such as a reader following along text that is being read using their finger or stylus, user interface elements that appear within a story that trigger and/or allow selection of various augmentation effects, natural user interface (NUI) input such as various gestures provided by the reader to trigger augmentation effects, content-driven mechanisms such as applying augmentation effects in association with punctuation that appears within a particular story, embedded tags or metadata within a story that trigger certain augmentation effects, using a page number to trigger augmentation effects, and the like.

Having considered an example augmentation effect module in accordance with one or more embodiments, consider now various aspects of speech modification that can be provided by audio augmentation module 300.

### Speech Modification For Distributed Story Reading

In the illustrated and described embodiment, one or more readers who are remote from one another can read an interactive story, such as one appearing in an electronic or digital book, and can have their speech modified or morphed as the story is read. In at least some embodiments, readers participating in a remotely read interactive story share a common view of the digital story content. This common view can be, and typically is rendered on a display of the reader's computing device, such as one or more of the computing devices as described above. In these instances, the readers are connected by video communication provided by a video camera that captures at least each reader's face so that the faces can be displayed to the other readers. In addition, a microphone captures the audio, i.e., the reader's voice, at each reader's location. Thus, input such as video, audio, and/or interaction with a shared digital story, that is sensed at each reader's computing device can be shared with the other participating readers.

Speech or audio morphing refers to the manipulation of the voice of a reader or call participant in various ways to deliberately sound like someone or something else. In one or more embodiments, the intention is that these manipulations or morphings should be amusing and entertaining in various ways. For example, during the reading of an electronic story, the reader's voice could be morphed to sound like a chipmunk, a monster, or some other type of character in the story. Any suitable type of audio morphing software can be utilized to achieve the intended effects. Some audio morphing software is designed to manipulate the spoken voice, while other software is designed to manipulate the sound of human singing. Yet other software can apply a broad range of generic and/or specific audio effects. In at least some instances, audio morphing can include augmenting a user's voice with instrumentation or even pitch correction for auto tuning. That is, as a participant is singing, musical augmentation can be added as background music. Additionally, if the singer is off key, pitch correction can be employed. Musical augmentation can be configured to automatically follow the singer's voice, thus speeding up and slowing down as the singer speeds up and slows down. In pitch correction scenarios, first the pitch of the singer can be determined. This can be done utilizing a pitch tracking algorithm. Next, the pitch can be modified to match the ascertained "correct" pitch. This can be done using various pitch-shifting algorithms.

In one or more embodiments, the morphing software can operate as a standalone morphing platform. Alternately or additionally, the morphing software can be packaged as a plug-in and subsequently loaded into a suitably-configured application. Typically morphing software includes various control parameters that affect, for example, the severity of the morphing effect. Yet other morphing software can be loaded by a suitably-configured communication application, such as a voice over IP (VoIP) application, so that the call participant's audio can be manipulated directly during the VoIP call. Some example software add-ons that implement spoken voice manipulation include ClownFish, MorphVox, and Voice Candy.

In principle, the underlying signal processing techniques that are utilized to effect voice manipulation or morphing are well known and understood by those of skill in the art. These processing techniques can include, by way of example and not limitation, overlap-add synthesis, pitch-synchronous overlap-add, Phase Vocoder (and variations thereof), time-domain filtering, frequency-domain filtering, recursive delay-line processing, amplitude (ring) modulation, traditional (time-domain, analog-model) vocoder techniques, cross-synthesis, Linear Predictive Coding, and the like.

The specific use of voice manipulation or morphing in the present context, as noted above, is intended for manipulation of a reader's voice as they read a shared story to a remote person. The underlying audio signal processing algorithms that are used depend on the specific effect that is desired. For example, to morph a reader's voice so that it sounds like a chipmunk, a pitch-shifting algorithm (SOLA) would be a suitable algorithm choice, where control parameters supplied to the algorithm will cause it to shift the pitch of the reader's voice upward dramatically. Similarly, but in a downward direction, control parameters can be utilized to achieve a much lower pitch of the reader's voice, such as that that would emulate a well-known character such as Darth Vader, or a monster.

Other examples of effects that can be applied in this context include male-to-female morphing, female-to-male morphing, exaggerating the pitch contour (hysterical effect, vibrato effect, old-lady effect, and the like), removing pitch contour (robotic effect), whispering (where pitch information is replaced by a noise source), and so-called voice conversion in which a person's voice is modified to sound like a specific other person.

As noted above, augmentation such as audio or voice morphing can take place in different locations. For example, augmentation can take place at the sender's or reader's computing device, at an intermediate computing device such as a server (e.g., a cloud-based approach), and/or at the receiver's computing device.

With respect to augmentation that takes place at the sender's or reader's computing device, consider the following. When the reader's voice is captured, the augmentation effect module 112 processes the audio data that is received from associated microphone in order to impart some type of different characteristic to it, examples of which are provided above. The augmented audio data is then encoded and compressed and then transmitted either to a server for forwarding on to one or more other participants, or directly to one or more other client devices such as those in a peer-to-peer network. By performing augmentation on the reader's computing device, the reader can be provided with feedback on how their voice sounds with the least amount of lag. The reader's experience in this instance can be improved through the use of a headset or other audio feedback control mechanisms which can reduce acoustic feedback.

With respect to the cloud-based approach, consider the following. The cloud-based/server approach allows availability of more processing power independent of the constraints of either the reader or listener device. In this approach, audio data that is produced by a reader's computing device can be sent to a suitably-configured server for further processing. In this instance, the server includes an augmentation effect module 112 to process the audio data as described above. In this scenario, the audio data may or may not be compressed before it is sent to the server. If the audio data is compressed before it is sent to the server, the server can decompress the audio data, process it using the augmentation effect module 112, encode and compress the augmented audio data and distribute it to the other participants. If the audio data is sent to the server in an uncompressed format, the server can process it using the augmentation effect module 112, encode and compress the augmented audio data for distribution to the other participants.

With respect to augmentation that takes place at the receiver's computing device, consider the following. In this instance, the reader's audio data is distributed to the other participants. When the other participants' computing devices receive the audio data, whether compressed or uncompressed, an augmentation effect module 112 on the participant's computing devices processes the audio data (which is first decompressed, if need be) as described above to provide an augmentation. This approach can offer less control to the reader over how their voice is modified. Correspondingly, each participant has the potential to modify the reader's voice in a manner chosen by them.

FIG. 4 illustrates a flow diagram that describes steps in a method in accordance with one or more embodiments. The method can be implemented in connection with any suitable hardware, software, firmware or combination thereof. In at least some embodiments, aspects of the method can be implemented by a suitably configured software module, such as augmentation effect module 112 of Figs. 1-3.

Step 400 establishes a communication connection between multiple participants. The communication connection is established to enable the participants to share an interactive reading experience in which an electronic story is shared amongst the participants. Any suitable type of communication connection can be established, examples of which are provided above.

Step 402 receives audio data associated with the reader of the electronic story that is being shared with one or more other remote participants. This step can be performed in any suitable way. For example, as the reader reads the electronic story into a microphone, the associated audio can be converted into audio data for further processing.

Step 404 augments the audio data. The audio data can be augmented in any suitable way, examples of which are provided above and below. Further, this step can be performed at any suitable location. For example, in at least some embodiments, this step can be performed at or by the reader's computing device. Alternately or additionally, this step can be performed by a server that received the audio data of step 402. Alternately or additionally, this step can be performed by a computing device associated with each of the remote participants. Examples of how this can be done are provided above.

Step 406 enables the remote participants to consume the augmented audio data. The step can be performed in any suitable way. For example, in embodiments where the audio data is augmented on the reader's computing device, step 406 can be performed by transmitting or otherwise conveying the augmented audio data to a computing device associated with each of the remote participants. In embodiments where the audio data is augmented by a server, the step can be performed by the server distributing the augmented audio data to a computing device associated with each of the remote participants. In embodiments where the audio data is augmented by a computing device associated with a remote participant, the step can be performed by enabling the remote participant to consume the augmented audio data via a suitably-configured application.

Having considered various ways in which speech can be augmented in a shared-story scenario, consider now a discussion of various ways in which a determination can be made to decide when to perform speech augmentation.

### Using Cues to Decide When to Augment Speech

As noted above, the augmentation cue module 304 (FIG. 3) is configured to enable augmentation effects to be cued as a story is read. The augmentation cue module 304 can perform its function in a variety of different ways. For example, the augmentation cue module 304 can use various means of ascertaining a reader's location within a particular story that is being read. By knowing the reader's location, various augmentation effects can be triggered at appropriate times. Any suitable means of ascertaining a reader's location within a particular story can be utilized without departing from the spirit and scope of the claimed subject matter. Various non-limiting examples of how this can be done are provided just below.

### Speech Recognition

In one or more embodiments, automatic speech recognition can be utilized to recognize where, in a particular narrative, the reader is reading and use this information to trigger various augmentation effects at the appropriate time. In these instances, the augmentation cue module 304 includes a speech recognition component that tracks where in the story the reader is reading through analysis of audio signal data that is captured by a suitably-configured microphone. The augmentation cue module 304 can then trigger augmentation events as appropriate. For example, assume that participants are sharing a story about Elmo. When the reader reaches words that are spoken by Elmo, the reader's voice can be morphcd to sound like Elmo. When Elmo's phrase is complete, the reader's voice can be returned to its normal sound. Alternately or additionally, augmentation effects can be applied with respect to particular words that are read by the reader. For example, background sounds or effects can be triggered when the reader reads words such as "wind", "thunder", "rain", and the like.

In one or more embodiments, speech recognition can be used to enable other forms of augmentation effects. For example, if a particular participant says a word corresponding to an image or object that appears on an electronic page, an augmentation effect can be applied. For example, assume one of the participants is a child and the child says the word "truck" in response to an image of the truck appearing on the electronic page. As a result, a brief animation of the truck can be initiated such as, for example, having the truck's wheels turn, and/or playing an audio clip of the truck's engine. In these instances, these fun animations and sounds can reinforce the child's motivation to learn words corresponding to objects on a page.

Any suitable type of speech recognition technology can be used to implement the described embodiments. For example, some approaches can utilize some form of automatic speech recognition (ASR). ASR has a wide variety of uses including within the fields of telephony, computer gaming and simulation, and the like. Techniques that are the same as or similar to those utilized in these and other fields can be utilized to recognize speech as described above. One such technique is known as full continuous ASR.

Full continuous ASR acquires audio data corresponding to a reader's speech and outputs a sequence of words corresponding to what is being said - in this case the text of a particular story that is being read. Position determination can be achieved by performing a simple matching operation between the sequence of words that are output from the ASR and words in the text that are being read. This can be implemented using a standard container, such as a hash table or a multi-map for each page, as will be appreciated by the skilled artisan. In these instances, a recognized word is utilized as a key, and an associated map returns the position of this word on the page. In one or more embodiments, a scheme can be utilized for looking ahead in cases where the reader may skip a word or words, and/or looking back in cases where a reader may repeat some words. This can increase the robustness of the speech recognition algorithm. When the position is determined, the augmentation cue module 304 can use the position as an index into a table of effects or augmentations as described below.

Other speech recognition approaches can be utilized as well. For example, an approach having a reduced computational cost can be utilized which employs a simplified form of ASR commonly referred to as limited vocabulary speech recognition. Here, the search space for possible words is limited to the words in the neighborhood of the last known position (initially 0, if the reader starts reading from the beginning). At any given time, the algorithm needs only to distinguish between perhaps 5-10 words, thus greatly simplifying the recognition problem. If there are multiple instances of a given word, e.g., the multi-map returns more than one index, the range might be reduced until there are no duplicates. Alternately or additionally, a count can be maintained so that the first time a duplicated word is detected, the position is taken to be that of the first occurrence and the second time it is detected the position is taken to be that of the second occurrence, and so on. As in the above approach, some look-ahead and look-back techniques can be included to improve algorithmic robustness.

In either of these approaches, as well as others, the speech recognition process can be facilitated by knowledge of the page number or pair of page numbers that are currently being displayed. In this manner, the search space is limited to those words appearing on those particular pages. In this instance, the system already knows the page or page numbers since this is the mechanism that is employed to determine when to change the display to show the next page or pages of electronic book.

As an example of how position data extracted using the techniques described above can be utilized to trigger various augmentations, consider the following tables.

**Table 1**

| **Position** | **Voice Affect** |
|---|---|
| 31 | Chipmunk Morph Begin |
| 44 | Chipmunk Morph End |
| 57 | Robot Morph Begin |
| 71 | Robot Morph End |

Table 1 is an example of how the position information from a suitably-configured position tracker can be used as an index into a table of effects to trigger a particular augmentation when a specific word is reached on the page to which the table is bound. In one or more embodiments, a single table can be utilized to trigger augmentation effects for each page in the book. Alternately, a single table can be utilized for the entire book. In this instance, the table could be indexed not by position within a page, but rather by position within the entire book.

In addition, one or more tables can be utilized to determine when to trigger background audio sounds, e.g., jungle sounds, thunder, applause, and the like. If there is only one table, it can be indexed by page number, as in the following example.

**Table 2**

| **Page** | **Background Sound** |
|---|---|
| 3 | Birds Chirping |
| 8 | Jungle |
| 14 | Rainstorm |
| 16 | Birds chirping |

Here, Table 2 includes global background audio effects that are indexed by page number. If more fine-grained control over when these background sounds are triggered is desired, multiple tables of metadata, e.g., one per page, indexed by position within the page can be included. In this case the table would have a format similar to that of Table 1, where the "Voice Effect" column would be replaced with "Background Sound".

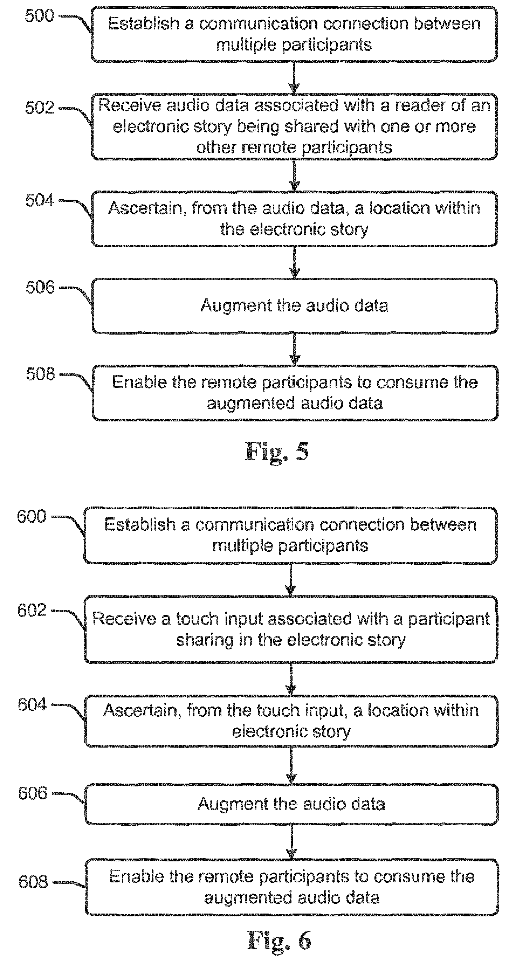

FIG. 5 illustrates a flow diagram that describes steps in a method in accordance with one or more embodiments. The method can be implemented in connection with any suitable hardware, software, firmware or combination thereof. In at least some embodiments, aspects of the method can be implemented by a suitably configured software module, such as augmentation effect module 112 of Figs. 1-3.

Step 500 establishes a communication connection between multiple participants. The communication connection is established to enable the participants to share an interactive reading experience in which an electronic story is shared amongst the participants. Any suitable type of communication connection can be established, examples of which are provided above.

Step 502 receives audio data associated with a reader of the electronic story that is being shared with one or more other remote participants. This step can be performed in any suitable way. For example, as the reader reads the electronic story into a microphone, the associated audio can be converted into audio data for further processing.

Step 504 ascertains, from the audio data, a location within the electronic story. Examples of how this can be done are provided above. Responsive to ascertaining a location within the electronic story, step 506 augments the audio data. The audio data can be augmented in any suitable way, examples of which are provided above and below. Further, this step can be performed at any suitable location. For example, in at least some embodiments, this step can be performed at or by the reader's computing device. Alternately or additionally, this step can be performed by a server that received the audio data of step 502. Alternately or additionally, this step can be performed by a computing device associated with each of the remote participants. Examples of how this can be done are provided above.

Step 508 enables the remote participants to consume the augmented audio data. The step can be performed in any way. For example, in embodiments where the audio data is augmented on the reader's computing device, step 508 can be performed by transmitting or otherwise conveying the augmented audio data to a computing device associated with each of the remote participants. In embodiments where the audio data is augmented by a server, the step can be performed by the server distributing the augmented audio data to a computing device associated with each of the remote participants. In embodiments where the audio data is augmented by a computing device associated with a remote participant, the step can be performed by enabling the remote participant's device to augment the audio data by processing it locally using a suitably configured application.

Having considered example embodiments that utilize speech recognition to cue augmentation effects, consider now various touch-based approaches.

### Using Touch to Decide When to Augment Speech

In one or more embodiments, touch can be utilized to decide when to augment speech associated with reading an electronic story. As an example, consider the following. If the reader is participating in a shared story experience using a touch-enabled device, as the reader reads, they can trace their finger or stylus along the words as they are read. Augmentations can be triggered based on the words and their position in the story. Using this approach can offer more control than the speech recognition approach described above. For example, if the user maintains their finger in a particular position that results in augmented speech, the user can ad-lib and speak words that are not included in the story, while having those words augmented.

Using this approach, a touch-based index can be generated using bounding box methods to determine which of the collection of words on the page is being pointed to. According to this approach, individual words have associated bounding boxes. When the touch location falls within a word's bounding box, its corresponding index is generated. This index can be used in connection with one or more tables, such as those described above, to ascertain an augmentation effect to apply.

FIG. 6 illustrates a flow diagram that describes steps in a method in accordance with one or more embodiments. The method can be implemented in connection with any suitable hardware, software, firmware or combination thereof. In at least some embodiments, aspects of the method can be implemented by a suitably configured software module, such as augmentation effect module 112 of Figs. 1-3.

Step 600 establishes a communication connection between multiple participants. The communication connection is established to enable the participants to share an interactive reading experience in which an electronic story is shared amongst the participants. Any suitable type of communication connection can be established, examples of which are provided above.

Step 602 receives a touch input associated with a participant sharing in the electronic story. The participant can be the reader of the story or one of the other remote participants. This step can be performed in any suitable way. For example, as the reader reads the electronic story into a microphone, the associated touch input can be received as the reader follows along the text of the story with his or her finger.

Step 604 ascertains, from the touch input, a location within the electronic story. Examples of how this can be done are provided above. Responsive to ascertaining a location within the electronic story, step 606 augments the audio data. The audio data can be augmented in any suitable way, examples of which are provided above and below. Further, this step can be performed at any suitable location, examples of which are provided above.

Step 608 enables the remote participants to consume the augmented audio data. The step can be performed in any suitable way, examples of which are provided above.

Having considered example embodiments that utilize touch input to apply augmentation effects, consider now how user interface elements within a story's content can be utilized to apply augmentation.

### Using User Interface Elements to Decide When to Augment Speech

In one or more embodiments, user interface elements can be utilized to decide when to augment speech. The user interface elements can comprise elements that are not part of a story's content. Alternately or additionally, the user interface elements can comprise elements that are part of a story's content.

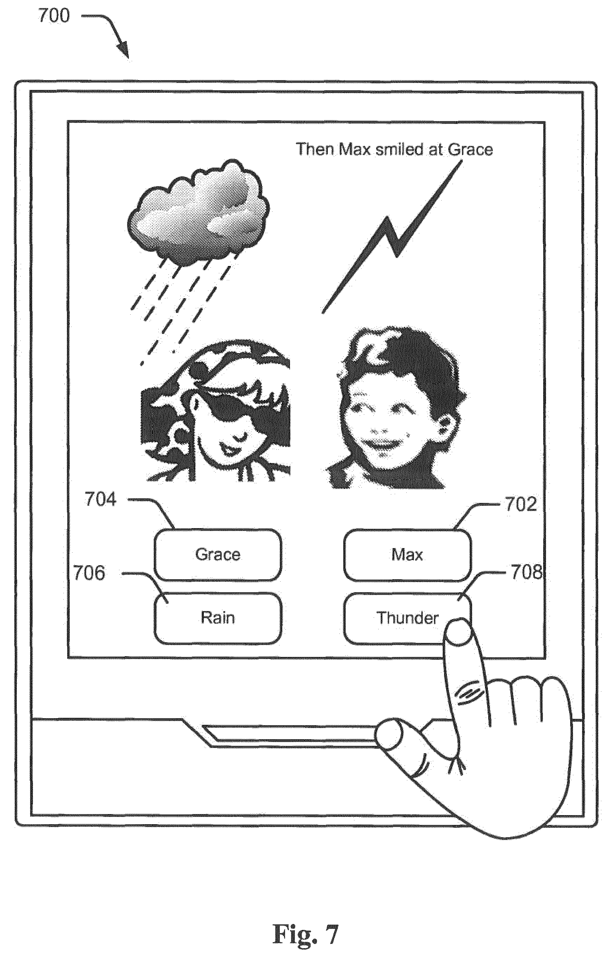

In one or more embodiments, when an electronic story is presented on a display device, various control buttons or control widgets can also be presented to enable audio augmentation or other augmentation effects. In these embodiments, the control buttons or widgets would not constitute part of the story's content. Rather, the buttons or widgets constitute instrumentalities through which a user can interact with a particular story. As an example, consider FIG. 7. There, a user interface illustrating aspects of electronic story is shown generally at 700. In this particular electronic story, there are two actors -- Max and Grace, and two effects -- rain and thunder. Notice in this example that four control buttons 702, 704, 706, and 708 are provided. Control buttons 702 and 704 are associated with the story's actors, while control buttons 706 and 708 are associated with effects that occur within the story. While a particular control button, for example 702, associated with the story's actor is selected, the reader's speech will be morphed to sound like the actor. Alternately, while a particular control button associated with an effect that occurs within the story is selected, audio associated with a particular effect will be rendered. In this particular example, selecting the rain control button 706 will cause the sound of rain to be rendered for the story's participants. The buttons can be selected by any of the participants.

This approach can also allow a degree of ad-libbing so that the reader can go "off script" to cause different effects within a story at locations where such effects may not have been intended by the content developer. For example, a reader may opt to randomly apply an effect by pressing a particular control button at ad hoc or humorous times. In addition, this approach uses less (or no) pre-processing of a particular story. For example, a fixed set of augmentations such as character voices, background sounds, and the like are offered throughout the entire story and it is up to the reader when to activate a particular augmentation.

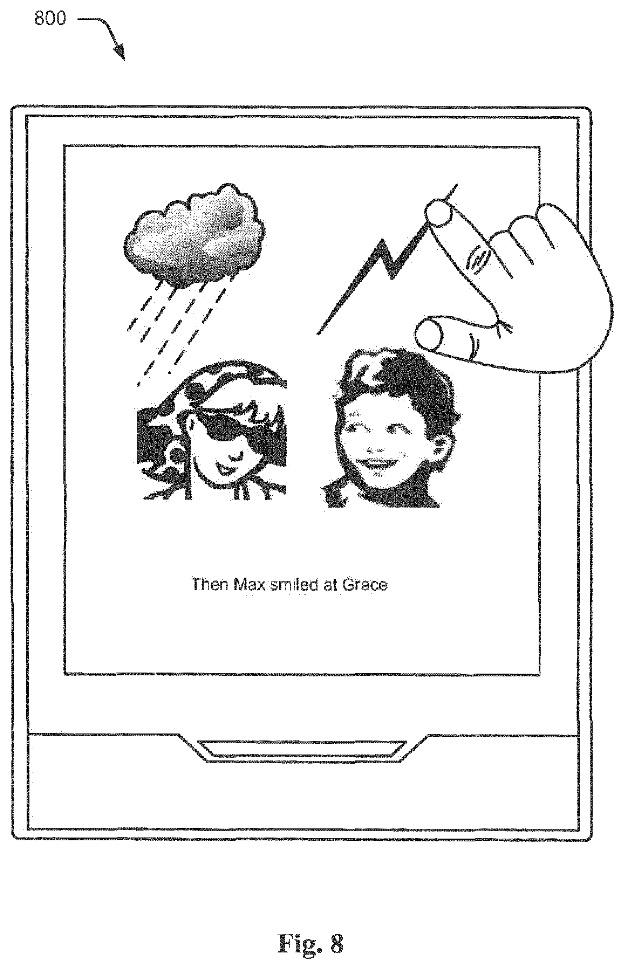

Alternately or additionally, user interface elements that constitute part of the story's content can be utilized as a basis to apply augmentation. As an example, consider FIG. 8, which is similar to FIG. 7 and shows a user interface illustrating aspects of an electronic story is shown generally at 800. Here, however, the control buttons and widgets have been removed. In these embodiments, the reader can touch objects within the story, such as the illustrated lightning bolt, to cause an effect to be applied. Similarly, by touching a particular actor, the reader's voice can be morphed to sound like that actor. Likewise, by touching on a particular phrase, e.g., "fire engine siren" that might appear in the story's text, the fire engine siren effect can be applied. Thus, in this manner, objects within a story are utilized as "implicit" buttons that trigger augmentation effects.

In these embodiments, a reader's fun may be enhanced by being provided with an ability to explore which objects on a particular page trigger which effects. Alternately, these "implicit" buttons might be visually indicated with a highlight, link, or outline indicating that they can be touched to activate an augmentation effect.

From an educational standpoint, use of these "implicit" buttons to activate augmentation effects can be used as a reward for one person, such as a grandchild, correctly identifying what another person, such as a grandparent, says or directs. For example, if the grandparent says "click the tree to hear forest sounds", when the grandchild correctly clicks the tree in the book, a forest background sound can be played as a reward to the child. As another example, the grandparent may say "click the squirrel to make me sound like a squirrel". If the child clicks on the squirrel, as opposed to an incorrect guess, they will now hear their grandparent's voice morphcd to sound like a squirrel.

In addition to augmentation effects to a reader's voice, touching on a particular object may cause the object to be modified in some manner. For example, if the reader touches on a particular actor in a story, not only would the reader's voice be morphed to sound like the actor, but the actor could also be animated so that their mouth and face move mirroring that of the reader's. This can be accomplished by processing the video signal of the reader as captured by an associated video camera to create a model that can be used to drive the actor's presentation in the electronic book. For example, a three-dimensional mesh can be algorithmically fit to a reader's face to track their facial features and position in real-time. This information can then be used as a model to drive the actor's presentation in electronic book. This approach can be the same as or similar to that used in Microsoft's Kinect for Windows.

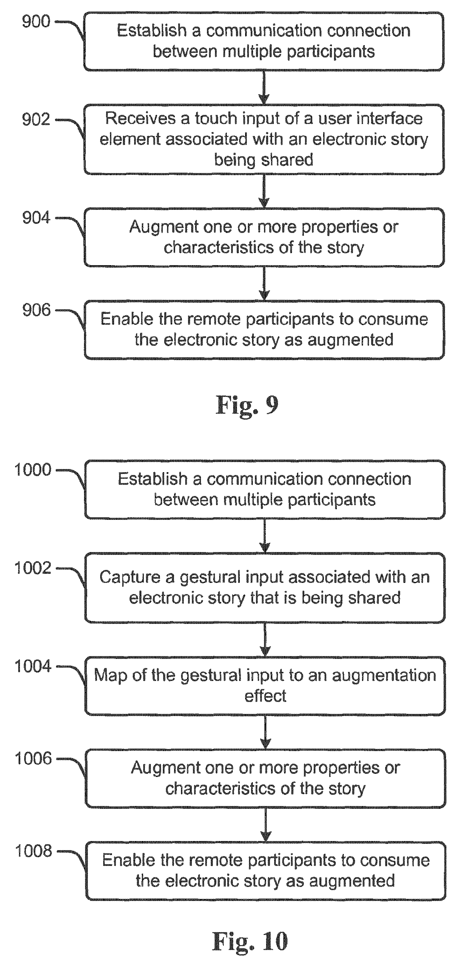

FIG. 9 illustrates a flow diagram that describes steps in a method in accordance with one or more embodiments. The method can be implemented in connection with any suitable hardware, software, firmware or combination thereof. In at least some embodiments, aspects of the method can be implemented by a suitably configured software module, such as augmentation effect module 112 of Figs. 1-3.

Step 900 establishes a communication connection between multiple participants. The communication connection is established to enable the participants to share an interactive reading experience in which an electronic story is shared amongst the participants. Any suitable type of communication connection can be established, examples of which are provided above.

Step 902 receives a touch input of a user interface element associated with an electronic story that is being shared with one or more other remote participants. The user interface element may or may not comprise part of a story's content, as noted above. The touch input can be received from any of the participants.

Responsive to receiving the touch input, step 904 augments one or more properties or characteristics of the story. For example, the reader's voice can be augmented as described above. Alternately or additionally, one or more effects can be applied as described above. Further, content of the story itself can be augmented or modified. For example, augmentation can further include augmenting video associated with the story, e.g., manipulating one or more objects within the story as described above and below. Further, this step can be performed at any suitable location, examples of which are provided above.

Step 906 enables the remote participants to consume the electronic story as augmented. The step can be performed in any way, examples of which are provided above.

Having considered example embodiments that utilize touch input to apply augmentation effects, consider now how gestures can be utilized to apply augmentation.

### Using Gestures to Apply Augmentation

In one or more embodiments, gestures can be utilized to apply augmentation. The gestures can include touch-based gestures as well as non-touch-based gestures, such as those provided through a natural user interface (NUI). In either case, particular gestures can be mapped to various augmentations. As an example, consider non-touch-based gestures that can be captured by a video camera and analyzed in much the same manner as gestures are captured and analyzed by Microsoft's Kinect technology.

In this particular instance, assume that a reader is reading a story that is shared with other participants. A forward-facing camera captures images of the reader. When the reader reaches a particular part of the story, they make a swiping gesture over one of the story's characters. The swiping gesture is then mapped to a voice effect that morphs the reader's voice into the voice of the character over which the swiping gesture occurred. Similarly, assume that in this particular story a number of background sounds are available. As the reader progresses through the story, they make a tapping gesture in space over a rain cloud which is captured by the forward-facing camera and mapped to a background sound in the form of thunder.

FIG. 10 illustrates a flow diagram that describes steps in a method in accordance with one or more embodiments. The method can be implemented in connection with any suitable hardware, software, firmware or combination thereof. In at least some embodiments, aspects of the method can be implemented by a suitably configured software module, such as augmentation effect module 112 of Figs. 1-3.

Step 1000 establishes a communication connection between multiple participants. The communication connection is established to enable the participants to share an interactive reading experience in which an electronic story is shared amongst the participants. Any suitable type of communication connection can be established, examples of which are provided above.

Step 1002 captures a gestural input associated with an electronic story that is being shared with one or more other remote participants. The gestural input may be a touch-based input or a non-touch-based input as noted above.

Responsive to capturing the gestural input, step 1004 maps the gestural input to an augmentation effect and step 1006 augments one or more properties or characteristics of the story using the augmentation effect. For example, the reader's voice can be augmented as described above. Alternately or additionally, one or more effects can be applied as described above. Further, content of the story itself can be augmented or modified. For example, augmentation can further include augmenting video associated with the story, e.g., manipulating one or more objects within the story as described above and below. Further, this step can be performed at any suitable location, examples of which are provided above.

Step 1008 enables the remote participants to consume the electronic story as augmented. The step can be performed in any way, examples of which are provided above.

Having considered example embodiments that utilize gestural input to apply augmentation effects, consider now how story content itself can be utilized to apply augmentation.

### Using Story Content to Apply Augmentation

In one or more embodiments, content of the story can provide cues as to when to apply augmentation. For example, the augmentation effect module 112 can include a content parser that parses content to look for places where augmentation is to be applied. The content parser might identify certain words, e.g. "fire engine" which are then used as an indication of a location to apply augmentation, e.g., a fire engine sound. Similarly, the content parser can look for certain punctuation cues to use to apply augmentation. For example, the content parser can look for quotation marks and use the location of the quotation marks as an index into an augmentation effect table. Consider the following example:
Sadie the mouse said "I'm going to move that cheese."
[The previous text is quote region 1].
Billy the mouse said "You better move it fast because I think they're watching."

[The previous text is in quote region 2].

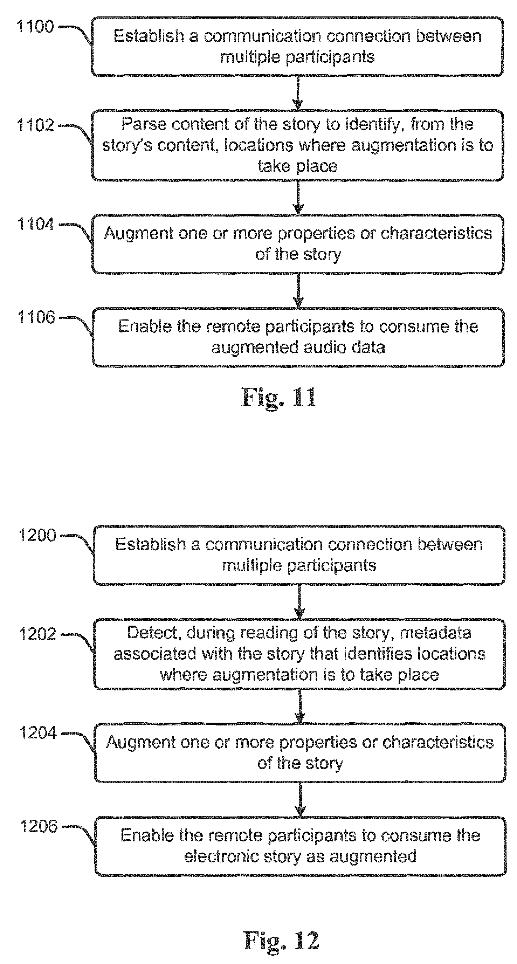

FIG. 11 illustrates a flow diagram that describes steps in a method in accordance with one or more embodiments. The method can be implemented in connection with any suitable hardware, software, firmware or combination thereof. In at least some embodiments, aspects of the method can be implemented by a suitably configured software module, such as augmentation effect module 112 of Figs. 1-3.

Step 1100 establishes a communication connection between multiple participants. The communication connection is established to enable the participants to share an interactive reading experience in which an electronic story is shared amongst the participants. Any suitable type of communication connection can be established, examples of which are provided above.

Step 1102 parses the content of the story to identify, from the story's content, locations where augmentation is to take place. Step 1104 augments one or more properties or characteristics of the story based on locations identified from parsing the story's content. For example, the reader's voice can be augmented as described above. Alternately or additionally, one or more effects can be applied as described above. Further, content of the story itself can be augmented or modified. For example, augmentation can further include augmenting video associated with the story, e.g., manipulating one or more objects within the story as described above and below. Further, this step can be performed at any suitable location, examples of which are provided above.

Step 1106 enables the remote participants to consume the electronic story as augmented. The step can be performed in any way, examples of which are provided above.

Having considered example embodiments that utilize story content to apply augmentation effects, consider now how story content can include metadata such as tags to indicate when augmentation is to be applied.

### Using Story Metadata To Apply Augmentation

In one or more embodiments, metadata that formulates part of the electronic story's content can be utilized to apply augmentation. For example, header information in a story's file can include metadata tags that identify various locations within the story where augmentation is to take place. Similarly, metadata tags within the body of the story's content can identify locations where augmentation is to take place. Such metadata tags can identify not only locations where augmentation is to take place, but the type of augmentation that is to take place, e.g., "<morph.reader.voice morph=character_1/>". In this example, the location of the tag in the story's content indicates where a reader's voice is to be morphed, as well as the morphing operation that is take place, i.e., morphing the reader's voice to be that of "character_1".

FIG. 12 illustrates a flow diagram that describes steps in a method in accordance with one or more embodiments. The method can be implemented in connection with any suitable hardware, software, firmware or combination thereof. In at least some embodiments, aspects of the method can be implemented by a suitably configured software module, such as augmentation effect module 112 of Figs. 1-3.

Step 1200 establishes a communication connection between multiple participants. The communication connection is established to enable the participants to share an interactive reading experience in which an electronic story is shared amongst the participants. Any suitable type of communication connection can be established, examples of which are provided above.

Step 1202 detects, during reading of the story, metadata associated with the story that identifies locations where augmentation is to take place. This can be done by parsing the content to identify the metadata and hence the locations where augmentation can take place. Examples of metadata are provided above. Step 1204 augments one or more properties or characteristics of the story based on locations identified from the metadata. For example, the reader's voice can be augmented as described above. Alternately or additionally, one or more effects can be applied as described above. Further, content of the story itself can be augmented or modified. Further, this step can be performed at any suitable location, examples of which are provided above.

Step 1206 enables the remote participants to consume the electronic story as augmented. This step can be performed in any way, examples of which are provided above.

Having considered example embodiments that utilize metadata to apply augmentation effects, consider now how page numbers and other structure of an electronic story can be utilized to indicate when augmentation is to be applied.

### Using Page Numbers and Other Story Structure to Apply Augmentation

In one or more embodiments, the page numbers of the story or other story structure can be utilized to apply augmentation. For example, as a story is being read, when the reader reaches a certain page or paragraph, augmentation can be applied. Assume, for example, a story is being read and on page 3 of the story, the entire page includes a dialogue of one character. In this instance, voice morphing and/or other effects can be applied when the reader turns to page 3. When the reader turns to page 4, the voice morphing and/or other effects can be terminated. Alternately or additionally, once the augmentation begins, it may end naturally before the page or paragraph ends.

In operation, using page numbers or other story structure to apply augmentation can be implemented through the use of metadata that accompanies the story. This metadata can identify the pages, paragraphs, and/or other story structure that is to be utilized for augmentation as well as the type of augmentation to be applied. This can enable the generally automatic triggering of the augmentation as the reader reads through the story.

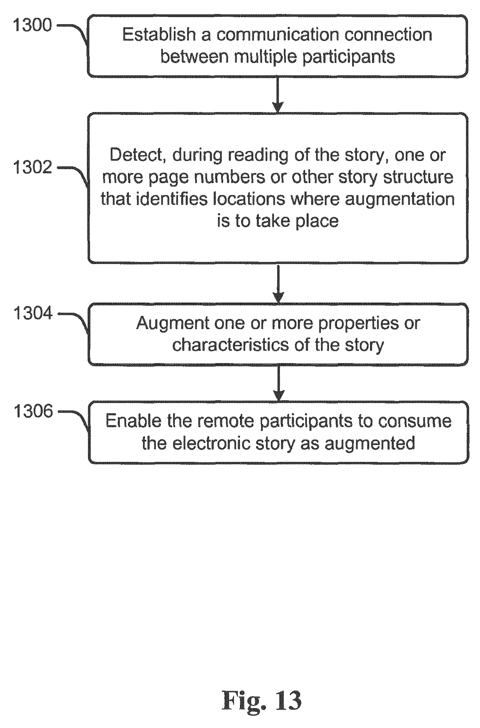

FIG. 13 illustrates a flow diagram that describes steps in a method in accordance with one or more embodiments. The method can be implemented in connection with any suitable hardware, software, firmware or combination thereof. In at least some embodiments, aspects of the method can be implemented by a suitably configured software module, such as augmentation effect module 112 of Figs. 1-3.

Step 1300 establishes a communication connection between multiple participants. The communication connection is established to enable the participants to share an interactive reading experience in which an electronic story is shared amongst the participants. Any suitable type of communication connection can be established, examples of which are provided above.

Step 1302 detects, during reading of the story, one or more page numbers or other story structure that identifies locations where augmentation is to take place. Step 1304 augments one or more properties or characteristics of the story based on locations identified from the page numbers or other story structure. For example, the reader's voice can be augmented as described above. Alternately or additionally, one or more effects can be applied as described above. Further, content of the story itself can be augmented or modified. For example, augmentation can further include augmenting video associated with the story, e.g., manipulating one or more objects within the story as described above and below. Further, this step can be performed at any suitable location, examples of which arc provided above.

Step 1306 enables the remote participants to consume the electronic story as augmented. This step can be performed in any way, examples of which are provided above.

Having considered example embodiments that utilize page numbers and other structure of an electronic story to indicate when augmentation is to be applied, consider now some implementation examples.

### Implementation Examples and Considerations

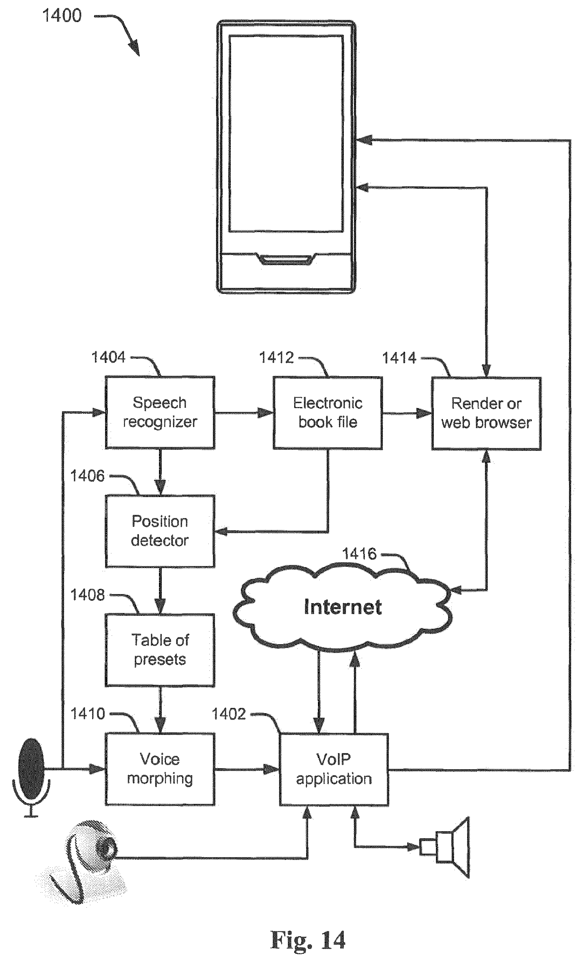

FIG. 14 illustrates aspects of an implementation of a device 1400 in accordance with one or more embodiments. Device 1400 includes a microphone, camera, and speaker as illustrated. In addition, the device includes a voice over IP (VoIP) application 1402, a speech recognizer 1404, a position detector 1406, a table of presets 1408, a voice morphing module 1410, an electronic book file 1412 (i.e. an eBook), and a renderer or web browser 1414. The network 1416 enables device 1400 to connect with other remote devices for sharing an interactive story. In at least some embodiments, each of the other remote devices includes the same or similar components that operate as described above and below. In the illustrated and described example, VoIP application 1402 sends and receives audiovisual streams via the Internet 1416. Streams that originate from the VoIP application 1402 can be processed, as described above, by a suitably-configured speech recognizer 1404, position detector 1406, and table of presets 1408.

In one or more embodiments, the VoIP application 1402 either includes or integrates with a web browser, such as web browser 1414, running on the same device. In this example, the electronic book file 1412 is accessed via a URL on the web that causes associated content to be downloaded from a server to the device in any of a number of standard e-book formats. Once downloaded, the content is rendered locally in the screen area of the device dedicated to the renderer or web browser 1414. When the VoIP application is launched, a call is set up in the usual manner. When both parties or each party agrees to share a book, the renderer or web browser 1414 is directed to a URL that corresponds to a library of books. The same URL is also transmitted from the call-initiating device to the other participants' devices. Each device or application will then open the same URL so that the participants can view the same library. Once the participants agree on choice and a participant selects a specific book's URL, the book's URL is transmitted to cach of the other participants so that they can open the same book. When the URL of the selected book is accessed, control data and content from the server is transmitted to the devices and the book is rendered accordingly. The underlying content can be represented in any number of formats including, by way of example and not limitation, HTML 5, and/or any of various EPUB versions or other proprietary formats.

In other embodiments, the electronic book can be rendered without the use of standard web browser. In this instance, a dedicated renderer can be used to render the electronic book. The content on the server can still reside in any of the formats listed above. One distinction, however, is that the full functionality of the web browser need not be present in these implementations. Instead, a dedicated rendering engine can be used for whatever electronic format has been chosen. The data can be transmitted directly from the server to the participant devices over standard connection such as, by way of example and not limitation, TCP/IP. The rendering engine then reads the control data and renders the pages of the book as they are received.

In yet other embodiments, the electronic book can be rendered using either of the above techniques, and then transmitted directly to the other participants as, for example, a video stream or a series of still images. This can be done using a typical screen-sharing setup. This can simplify the implementation of the far end application because neither a browser nor a rendering engine need be utilized.

In yet other embodiments, an electronic book can be rendered on the server and downloaded to all of the connected devices. In this case, the endpoints might be less powerful platforms, as all they need to do is play back the received audio and video streams. This would work for instances where, for example, the endpoints represent so-called "thin clients". The server renders the pages of the book, applies all augmentations to the audio and video streams received from the call participants, and creates composite images, such as a book page with the appropriate participant's video stream overlaid on top, for each of the input devices. For compatibility with existing VoIP frameworks, call audio can be encoded on the speaker's device and then decoded on the server before applying augmentation effects. The server can then re-encode the modified audio and send it to the other endpoints. It is also possible, in at least some instances, to send raw uncompressed audio and video to the server. This can save an encode/decode round-trip but can utilize considerably more network bandwidth since uncompressed streams are being sent. Video augmentation can be done in the same way, where the server decodes the video streams for all participants, applies any selected effects, and then re-encoded streams and sends them to the other participants.

### Capturing the Shared Story Experience for Subsequent Sharing

In one or more embodiments, a shared story experience can be captured for subsequent sharing. In these instances, as the story is being read, software at either end of the shared call can capture the video and audio streams being presented, along with any associated effects. The captured video and audio streams can be stored in a file on the device's disk for example, a nonvolatile memory, using any number of standard video formats such as MPEG-4 and the like. After the story is finished, as by closing the book, the user can be prompted as to whether they would like to share a video of the experience they had just enjoyed. If so chosen, the audio/video file can be uploaded to a server, e.g., YouTube, SkyDrive, and the like, and subsequently shared with other members of the user's family and/or community. This provides enjoyment and connection to others not directly participating in the call, and may also serve to increase the popularity of the story, indeed of the interactive story application itself. The file can also be retained for subsequent enjoyment by the original participants.

Having considered capturing a shared story for subsequent sharing, consider now a discussion of maintaining synchronization between remote clients.

### Synchronization between Remote Clients

In one or more embodiments, individual instances of an electronic book being shared can be synchronized between all of the participants' computers. Whenever one of the participants interacts with the book, control information corresponding to this interaction is transmitted to all other participants. Examples of interactions include, but are not limited to: advance or rewind to next/previous page, touch an object within a page, exit the book, skip to the end, set a bookmark, choose an existing bookmark, etc.

When this interaction control data is received, it causes the other applications to initiate the same action (e.g. next page, previous page, "object is touched", etc.) on the corresponding devices. These controls can be implemented via a predetermined protocol, for example sending ASCII strings such as the following over TCP/IP:
NEXTPAGE
PREVPAGE
EXITBOOK
SETBOOKMARK n
OPENBOOKMARK n
FIRSTPAGE
LASTPAGE
TOUCHON {x,y}
TOUCHOFF {x,y}
SELECTOBJECT n

Some of the above actions (for example, NEXTPAGE) might be initiated by any of the participants. A filtering/interlock mechanism precludes the various users' devices from getting out of synchrony. When a page change is requested locally, the command is immediately broadcast to all other participants. When a remote device receives this command, it will temporarily lock out any locally (to that device) generated page-change requests until it receives a PAGECHANGECOMPLETE message from the initiating device. The remote devices then enacts the command (e.g. turn to the next page), and then sends an acknowledgement (PAGECHANGEACKNOWLEDGE) message back to the initiating device. The page on the local (initiating) device is not changed until all remote devices have acknowledged receipt of the page-turn command. The local page is turned, and a PAGECHANGECOMPLETE message is broadcast. When remote devices receive this message, they are again free to respond to locally generated commands.

If a remote device receives a locally generated command (e.g., NEXTPAGE) that is prevented due to the corresponding (e.g.,PAGECHANGECOMPLETE) message not having been received, that device may trigger a sound such as, for example, the sound of the page tearing, or some other perceptible event such as a visual flashing, vibration, and the like, to indicate that their request has been ignored due to a potential conflict. This will reduce the disconcerting effect of having a temporarily unresponsive user interface.

### Media Stream Manipulation

As described above, one or more readers who are remote from one another can participate in reading an interactive story together, such as through an electronic and/or digital book. In some embodiments, this interactive experience can include modifying, processing, and/or augmenting video associated with the story, and incorporating the processed video into the story, as further described below. By basing the story, in part, on an associated video capture, participants in the interactive story can enhance the reading experience.

Various embodiments process video to detect a face, facial features, and/or regions contained within the video. Responsive to detecting the face, facial features, and/or regions, some embodiments augment the video based, at least in part, on the detected face, facial features, and/or regions. In some cases, the augmented video can be embedded within a story. Alternately or additionally, video can be processed to detect gestures and/or movement contained within the video. Visual and/or audio cues associated with the story can be based, at least in part, upon the detected gestures and/or movements.

As part of an interactive story experience, some embodiments enable a user to embed video and/or still images within the story experience. As described above, the user can be given cues or indications of various spots and/or images within the story that can be modified and/or personalized. For example, in some embodiments, a cue can be given to a user of a selectable image. Selecting the image can trigger additional video capture and/or image processing, which can subsequently be used to replace or modify the image, as further described below. In some cases, the user's video can directly replace the associated story image. In other cases, the user's video can be augmented and/or filtered to reflect characters within the story.

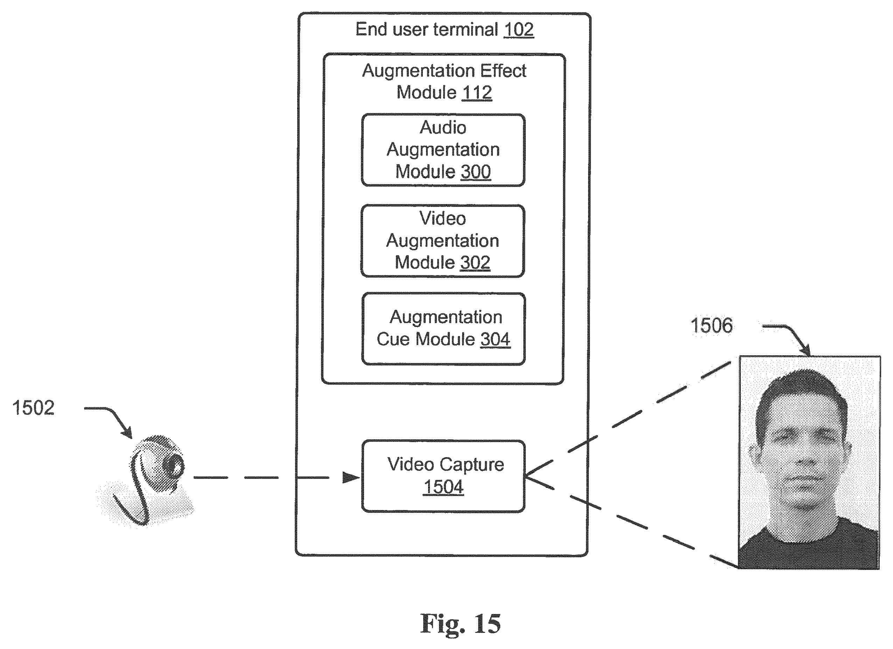

As part of the video capture process, consider Fig. 15, which illustrates an example embodiment, shown here as end user terminal 102 of Fig. 1. As previously illustrated and described above, end user terminal 102 contains augmentation effect module 112, which includes, among other things, audio augmentation module 300, video augmentation module 302, and augmentation cue module 304. For the purposes of this discussion, end user terminal 102 and its associated elements and environment have been simplified. However, it is to be appreciated and understood that this simplification is not intended to limit the scope of the claimed subject matter.

Among other things, end user terminal 102 receives video input from camera 1502. Camera 1502 represents functionality that can electronically capture, record, and/or process a series of images in motion. Further, the electronically captured images can be stored on any suitable type of storage device, examples of which are provided below. Here, camera 1502 is illustrated as a device external to the end user-terminal that sends captured video through a wired connection. However, any suitable type of connection can be used, such a wireless connection. In some embodiments, camera 1502 and user terminal 102 are integrated with one another on a same hardware platform (such as a video camera integrated on a smart phone). Alternately or additionally camera 1502 can be integrated with a peripheral of end user terminal 102, such as a camera integrated on display device connected to end user terminal 102. Thus, camera 1502 represents any form of device that can capture video electronically and/or send the video to end user terminal 102, whether they arc integrated or separate.

Video capture 1504 represents video images that have been received by end user terminal 102. In this example, video capture 1504 is generated by camera 1502 and stored locally on end user terminal 102. However, it is to be appreciated that video capture 1504 can also be stored remotely from end user terminal 102 without departing from the scope of the claimed subject matter. Thus, end user terminal 102 can acquire video capture in any suitable manner, such as through a camera directly connected to end user terminal 102 (as illustrated here), or through remote connections. In some embodiments, video capture can include images of one or more persons, such as the one or more participants and/or readers of the shared story experience. Here, video capture image 1506 represents one of a plurality of still images which comprise video capture 1504. For simplicity, discussions will be made with reference to video capture image 1506. However, it is to be appreciated that functionality described with reference to video capture image 1506 is equally applicable to video capture 1504 and/or the plurality of images.

When participating in a multi-user communication session, video oftentimes conveys emotions associated with the user more effectively than plain text. For example, the text phrase "Oh" can be interpreted as one of numerous emotions: surprise, disappointment, curiosity, excitement, anger, disgust, and so forth. Without knowing any context, a user reading this phrase may not interpret it as intended, resulting in a somewhat "flat" and misleading experience. However, a user watching a video of a second user saying this phrase can better interpret an intended emotion from visual cues of how the second user's face changes while saying the phrase. In a similar fashion, capturing these visual cues and/or gestures into a shared story can enhance the story experience.

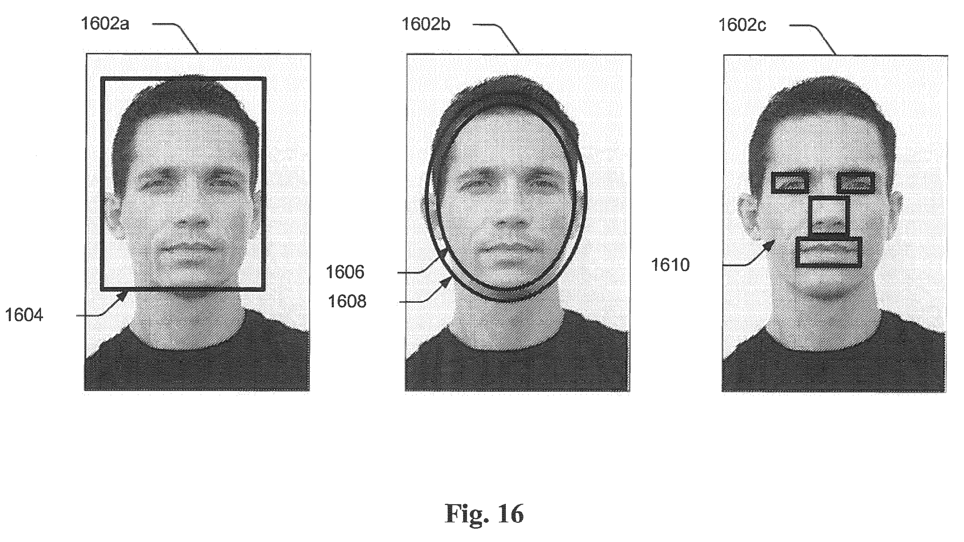

In some embodiments, face detection algorithms can automatically detect a face and/or regions of a face in the video capture. These algorithms can identify facial features within a video and/or still image, while ignoring and/or disregarding other objects within the image. For instance, consider Fig. 16, which depicts aspects of facial detection algorithms 1602a, 1602b, and 1602c applied to video capture image 1506 of Fig. 15. Facial detection algorithm 1602a represents an algorithm that generally detects a face and marks a location of the face using a box. In this example, a rectangular box is used to define region 1604 to identify where detected face is located. Any suitable size and shape can be used, such as a square box, an oval box, a circular box, and so forth. Alternately or additionally, the size of the region may change based upon how much of an image contains the detected face. In some cases, this general identification might be suitable in environments where there are less processing capabilities available.

Facial detection algorithm 1602b represents a facial detection algorithm with more refined identifications than that of facial detection algorithm 1602a. Here, two regions associated with the facial detection are identified, inner region 1606 and outer region 1608. In some embodiments, the area between inner region 1606 and outer region 1608 represents a region identified by the facial detection algorithm to be used as a "blending" and/or smoothing area. For example, the blending area can be used to transition the identified face and/or video into a second image within a story. Outside of region 1608, no pixels and/or content associated with video capture image 1506 are copied into the second image within the story. Conversely, the pixels and/or content encircled by region 1606 would be copied and/or transferred. The region between regions 1606 and 1608 might result in a blend between video capture image 1506 and the second image to smoothly transition between the separate images. Any suitable blending algorithm, such as an Alpha blending algorithm, can be used. In some cases, the blending algorithm(s) use a space, such as the space between region 1606 and region 1608, to transition a transparency of a selected image (such as video capture image 1506) from 0 (no transparency, 100% visible) to 1 (full transparency, 0% visible). In this manner, video images associated with a participant in the story can be superimposed upon one or more characters within the story, thus personalizing the experience.

As another example, facial detection algorithm 1602c identifies specific details associated with a face, shown generally here as regions 1610. Here, the eyes, the nose, and the mouth are separately located and identified from one another. As in the case above, these features can be superimposed on one or more images contained within a story, such as replacing the eyes nose and mouth of a cartoon character within the story. Alternately or additionally, these features can be monitored over time to identify gestures, such as a wink, a kiss, a sneeze, whistling, talking, yelling, blinking, a head nod, a head shake, and so forth. In turn, the identified gestures can drive animation of a cartoon character within the story. For example, in some embodiments, detecting a wink within the video can, in turn, can cause an associated cartoon character to wink. While discussed in the context of facial detection, it is to be appreciated and understood that any suitable gesture can be monitored and/or detected without departing from the scope of the claimed subject matter.

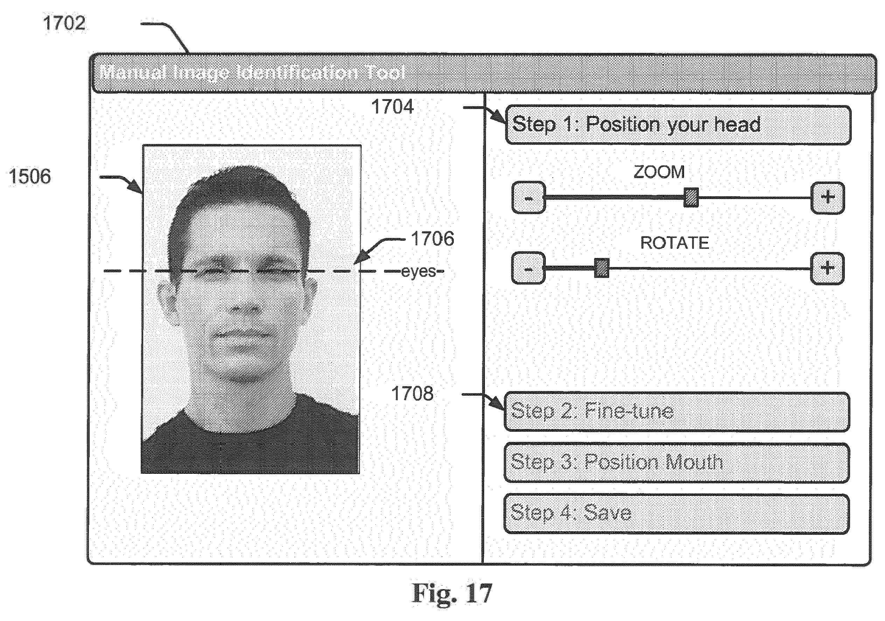

In some embodiments, a user can manually identify one or more regions within a video and/or still image to incorporate into the shared story experience. Consider Fig. 17, which illustrates an example user interface 1702. User interface 1702 enables a user and/or participant to customize what portions of the video and/or still image are augmented. In this example, user interface 1702 displays video capture image 1506 of Fig. 15 to the user as part of the customization process. This display can be configured to update to reflect modifications as changes are made and/or applied to video capture image 1506. For example, control 1704 allows the user to position an associated head within the image via zoom and rotate modifications. As a user slides the zoom controller bar to the left or right, user interface 1702 can update the display of video capture image 1506 to reflect an associated zoom factor. Similarly, as the user slides the rotate controller bar to the left or right, user interface 1702 may rotate the display of video capture image 1506 clockwise and/or counterclockwise. These updates can occur as the user is actively engaged with the control and/or when the user chooses to apply the changes. Alternately or additionally, one or more points of reference can be used to anchor positioning of an image. Here, anchor 1706 indicates a positioning associated with eyes contained within video capture image 1506. These anchors can be fixed or adjustable. In some embodiments, user interface 1702 can be configured to allow the user to drag and/or move anchor 1706. In other embodiments, anchor 1706 can be fixed in position and the user can drag and/or move video capture image 1506 to a desired position relative to the anchor. User interface 1702 includes additional controls 1708 to allow the user to find tune changes made to video capture image 1506, position a mouth anchor, and save changes. However, it is to be appreciated and understood that any suitable combination and/or types of controls can be included in user interface 1702 without departing from the scope of the claims subject matter, such as controls associated with cropping, modifying color saturation, modifying color tinting, identifying a nose position, and so forth. Further, these manual identifications can be performed on a still image associated with a video capture, a series of images associated with a video capture, or any combination thereof. For example, identifications made to a still image can then be subsequently applied to a series of other images with similar facial placement and/or aspect ratios.

The above discussions describe manual and automatic detection techniques associated with video capture and still images. While described in the context of identifying a face, facial features, and/or facial gestures, it is to be appreciated that these techniques can be modified and/or applied in any suitable manner. For example, instead of face recognition and/or identifying a wink, video can be processed to identify a hand wave, sign language gestures, and so forth. As discussed above, these identified gestures can then be used to influence animation and/or behavior of a shared story experience. Alternately or additionally, once various features have been identified (such as facial detection), the video can be augmented and/or enhanced as part of the story telling process.

Some embodiments augment and/or modify video capture data as part of a shared story experience. A reader and/or participant can upload video and incorporate a modified version of the video capture data into the story. In some cases, one or more filters can be applied to the video to modify its appearance, such as a high-pass filter, a low-pass filter (to blur an image), edge-enhancement techniques, colorized filters (e.g. index an arbitrary RGB table using a luminance channel of the source image), distortion filters (ripple, lens, vertical waves, horizontal waves, and so forth), sepia tone filtering, and so forth. For example, a "rotoscoping" filter can modify the appearance of a "real world" image to a "cartoon world" image. Rotoscoping can be achieved using a combination of several filters (for example, applying contrast enhancement, then converting from RGB color space to HSV color space, then quantizing the V coordinate very coarsely). One stage of professional rotoscoping typically involves rendering an outline around each face to be rotoscoped and then applying a rotoscoping algorithm. Alternately or additionally, the visual background of the story might be personalized into something familiar to the participants. For example, the background may be a picture of a participant's bedroom, house or neighborhood. Thus, images and/or objects within the story can be combined with at least part of a video capture and/or still image. For instance, an electronic story may include an image and/or object that displays a cartoon character sitting in a bedroom. In some embodiments, an image of a separate bedroom can be uploaded and combined with the cartoon character such that a resulting image and/or objects displays the cartoon character sitting in the separate bedroom. Further, in at least some embodiments, a reader's body motions can be captured, similar to Kinect-type scenarios, and used to drive the animation of a character in the story.

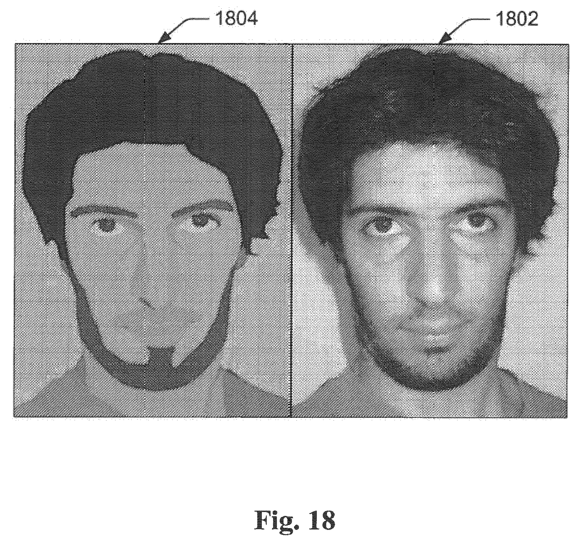

Consider Fig. 18, which illustrates before and after examples of a rotoscoping filter. Image 1802 illustrates a still image of a man. This image represents a real world image taken by a camera, such as camera 1502 of Fig. 15. Here, the image has been centered on the man's head. In some embodiments, image 1802 has been previously processed using facial detection algorithms as described above to remove other elements and/or objects surrounding the face. This image can be used as input to one or more filters, such as the rotoscope filter described above. Image 1804 illustrates how image 1802 would appear after applying a rotoscope filter. After filtering, image 1804 closely resembles a drawn version, or cartoon version, of image 1802. While discussed in the context of a still image, it is to be appreciated that filters can be applied to video capture without departing from the scope of the claimed subject matter.

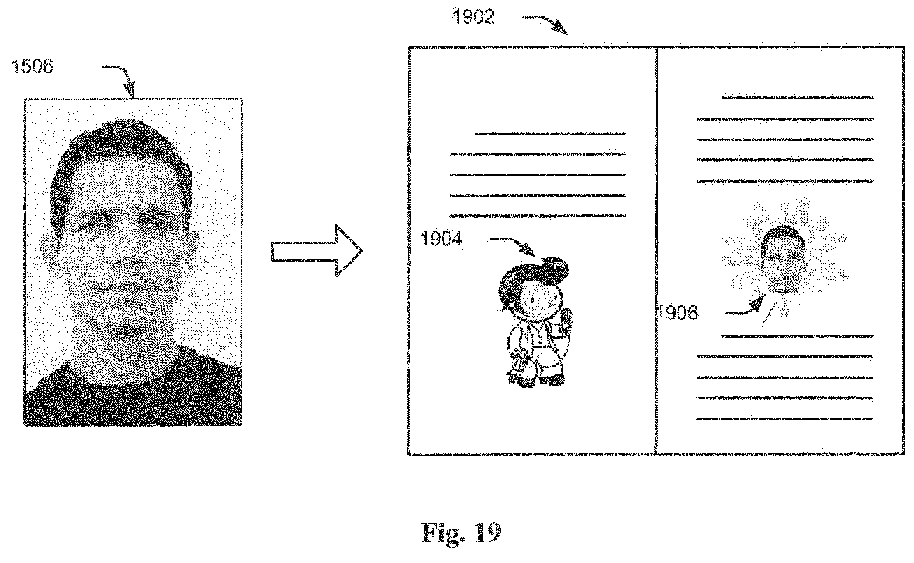

As previously described, detection of various events can cue the user when aspects of the story can be personalized, modified, and/or customized. Responsive to these cues, a user can personalize the story through, among other things, modifying video capture and embedding the modified video into the story. In some cases, the video capture can be automatically analyzed and/or manually marked for various features and/or gestures related to telling the story. For instance, consider Fig. 19, which illustrates enhanced interactive story 1902. In this example, video capture image 1506 is augmented and embedded into enhanced interactive story 1902 in two separate ways. Augmented video 1904 represents a rotoscoped image associated with video capture image 1506. Here, video capture image 1506 has been filtered with a rotoscope filter effect to transfer the associated face into the "cartoon world" as described above. In addition to applying the rotoscope filter as an augmentation process, the modified image is superimposed upon a cartoon body of a flower. In some embodiments, augmented video 1904 can be a still image associated with the video, while in other embodiments augmented video 1904 can be a series of images. Alternately or additionally, facial features detected in video capture image 1506 can drive facial changes associated with a cartoon contained within the story.

In addition to incorporating augmented video 1904, enhanced interactive story 1902 includes a still image associated with a face of video capture image 1506 superimposed upon image 1906. As discussed above, the face can be extracted using automatic and/or manual face detection processes. Here, the facial features are simply cut and pasted into image 1906. However, in other embodiments, other augmentation filters can be applied, such as the alpha blending algorithm described above.

A user can choose to incorporate video into a story experience in several ways. Some embodiments notify and/or cue the user of potential opportunities for video insertion and/or augmentation before, during, or after the reading process, examples of which are provided above. In some cases, the user may select a character from a list of available characters within the story to supplement, augment, or replace with video capture. This can also be done automatically. For example, any time the reader reads a quote from Elmo, the reader's voice is morphed to sound like Elmo, and the picture of Elmo in the electronic story is animated accordingly to the facial expressions of the reader. Alternately or additionally, selecting a character or cue notification by the user can activate a camera and/or the video capture process. In addition to notifying a user of potential augmentation opportunities, some embodiments enable the user to select how the video capture is processed, filtered, analyzed, and so forth. In other embodiments, when opportunities for video insertion and/or augmentation are detected, the video insertion and/or augmentation can occur automatically. For example, using the above example of Elmo, when Elmo's voice is detected as being read, video capture can be analyzed for gestures, which can be subsequently used to automatically animate an image of Elmo in the electronic story. In this manner, the story experience can be personalized by all participants associated with the story. It can additionally be noted that the video processing and/or augmentation can occur at any suitable device within the system, such as a device associated with capturing the video, a server device configured to store a composite story experience, and/or a receiving device.

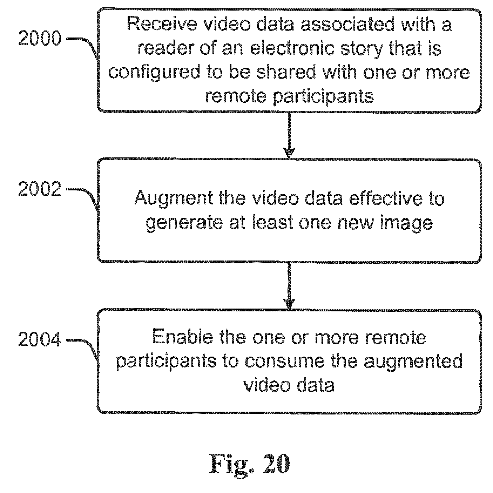

To further demonstrate, consider Fig. 20, which illustrates a flow diagram that describes steps in a method in accordance with one or more embodiments. The method can be performed by any suitable hardware, software, firmware, or combination thereof. In at least some embodiments, aspects of the method can be implemented by one or more suitably configured software modules executing on one or more computing devices, such as augmentation effect module 112, of Figs. 1-3.

Step 2000 receives video data associated with a reader of an electronic story that is configured to be shared with one or more remote participants. In some embodiments, the video data is received from a computing device associated with the reader. In other embodiments, the video data is acquired from a server location external to the computing device associated with the reader. Alternately or additionally, the video data can be acquired from a reader who is a remote participant or pre-recorded video stored locally and/or externally to the computing device. At times, the video data can be acquired and/or received responsive to receiving input associated with a prompt and/or cue associated with the electronic story, as further described above.

Responsive to receiving the video data, step 2002 augments the video data to generate at least one new image. For example, the video data can be analyzed using various algorithms, such as face detection algorithms, gesture detection algorithms, and so forth. The detection algorithms can sometimes alter and/or augment the video data to retain regions and/or images of interest and remove regions and/or images that are determined to be less relevant. In some cases, a filter can be applied to the video data to generate an altered version of the video data, such as applying a rotoscope filter effect to generate a "cartoon world" version of the video data, or blending the video data with other images. In other cases, the video data can be analyzed to identify one or more gestures captured within the video data. These gestures can then be utilized to drive behavior of images and/or video data associated with the electronic story. For example, images of a cartoon character associated within the electronic story can mimic gestures identified within the video data. Further, this step can be performed at any suitable location. In at least some embodiments, this step can be performed at or by the reader's computing device. Alternately or additionally, this step can be performed by a server that receives the video data of step 2000. Alternately or additionally, a computing device associated with each of the remote participants can perform this step. Examples of how this can be done are provided above. It is to be appreciated and understood that, while described generically using the term "images", any representation of graphical/visual data can be used without departing from the scope of the claimed subject matter, such as vector graphics, bitmap graphics, metafile formats, line graphs, Graphics Interchange Format (GIF), Interchange File Format (IFF), Joint Photographic Experts Group (JPEG), Tag Image File Format (TIF), and so forth.

Responsive to augmenting the video data to generate at least one new image, step 2004 enables the one or more remote participants to consume the augmented video data. For example, in embodiments where the video data is augmented on the reader's computing device, step 2004 can be performed by transmitting or otherwise conveying the augmented video data to a computing device associated with each of the remote participants. In embodiments where the video data is augmented by a server, the step can be performed by the server distributing the augmented video data to a computing device associated with each of the remote participants. In embodiments where the video data is augmented by a computing device associated with a remote participant, the step can be performed by enabling the remote participant to consume the augmented video data via a suitably-configured application.

Consider now some use scenarios that can employ the above-described embodiments.

### Example Use Scenarios

Assume that two people, "Billy" and "Uncle Joe", are remotely reading an electronic book. The book is an illustrated version of the familiar children's song "The Wheels on the Bus Go Round and Round". The book is open to a page showing a school bus, the bus driver, doors, wheels, and windshield wipers. When Billy initiates an augmentation effect, either by touching the driver's face, or some embedded control, face detection and rotoscoping are applied to cause Uncle Joe's face to be manipulated into a cartoon version and overlaid onto the bus driver's head. As various actions arc indicated in the story as through tracking by ASR, object interactions, receiving user interface input, and the like, they are enacted in the digital story display (e.g., wipers swish, doors open and shut, babies cry, and the like). Both Uncle Joe and Billy see these effects on their devices as they are applied.

Another use example includes utilizing placeholders for others to participate in the story reading. These placeholders can be built into the story and can be activated if those people are online at the time that the story is being read. This can enable discovering people with whom to read. For example, a child could be browsing the library for a book to read, and also see a list of family members who are online. They can then choose one or more family members to share a story with. Alternately, the child could be reading a book on their own, and upon turning to page 4, discover that Grandma is online and available to read with. This could be indicated by an embedded control or widget in the story that indicates a person is available for video chat. By clicking on the widget or control, a video chat session can be started. Alternately or additionally, the widget may be positioned outside (e.g. to the right of) the book, so that it is available regardless of the page being read. Alternately or additionally, Grandma may have started a video call and is already live in a placeholder location on page 4. Alternately or additionally, Grandma and the child may be reading together and, upon reaching page 4, they notice that the tree graphic is vibrating (or some other visual cue). The child or Grandma can then touch the tree and a third person, e.g., Uncle Dan, joins the video call, but just long enough to play the part of a squirrel, and perhaps a short conversation, after which Dan leaves the call and Grandma and the child resume reading the story.

Another use example can allow the reader or another participant to inject a short piece of content into the book, just prior to reading the story to remote participants. This can keep the content fresh and engaging, e.g., though the story remains the same, there might be surprises in store when you reach certain passages in the story. The injected content can be recorded directly on the device or, if from another participant, imported from a video file resident on the device. To implement this, the metadata for the electronic book could be extended to include containers (slots) for external files. In the simplest case, the filenames could be fixed, as in "externalVideo1.mp4", "externalVideo2.mp4", etc. As the electronic book is rendered, the metadata directs that these videos be streamed to coordinates on the page that are supplied within the metadata tags, as in:
<InjectedVideo width=640 height=480 xPos=640 yPos=480 videoContainet="externalVideol.mp4" triggerAction="button1Pressed"/>

Additional metadata tags (e.g. triggerAction above) could specify an action that triggers playback of the video. Other metadata tags would be more suitable when a video stream is to be embedded as part of a specific object on the page. An example is shown just below:
<OverlaidVideo objectAnchot="Schoolbus" offsetX=10 offsetY=20 videoContainec="externalVideo2.mp4" transparentColor=0x0080FF />

In the above tag, the Schoolbus object is to receive an overlaid video stream from the named file. It will be positioned at offset {10,20} relative to the top left of the Schoolbus graphic's bounding box. The video may use chroma-keying, such that all pixels in the incoming video having color 0x0080FF will be transparent. All other pixels in the video will replace the pixels on the corresponding pixel of the eBook page. This allows traditional blue-screen techniques to be used to overlay, for example, just the head and shoulders of a person's video recording. Other techniques such as background removal can be utilized.

Another user scenario can include so-called co-located scenarios where participants may be sitting together and enjoying the story on the same device. For example, Grandma and her grandchild may be enjoying a story together and have the faces morphed onto characters of the story. Audio augmentation could be implemented, for example, in a record-then-play approach. Assume, for example, that the story involves a cave and the electronic story has a user interface element in the form of a record button. Grandma presses the record button and records "Help me, I'm stuck in a cave". Her grandchild may then touch the character associated with Grandma and hear the phrase in that character's voice, with reverberation applied.

In the above examples, all participants typically enjoy the same experience (embedded video from the reader, from a third party, graphic elements indicating presence of a third participant, etc.).

Having considered example use scenarios, consider now a discussion of an example device that can be utilized to implement one or more embodiments.

### Example Device

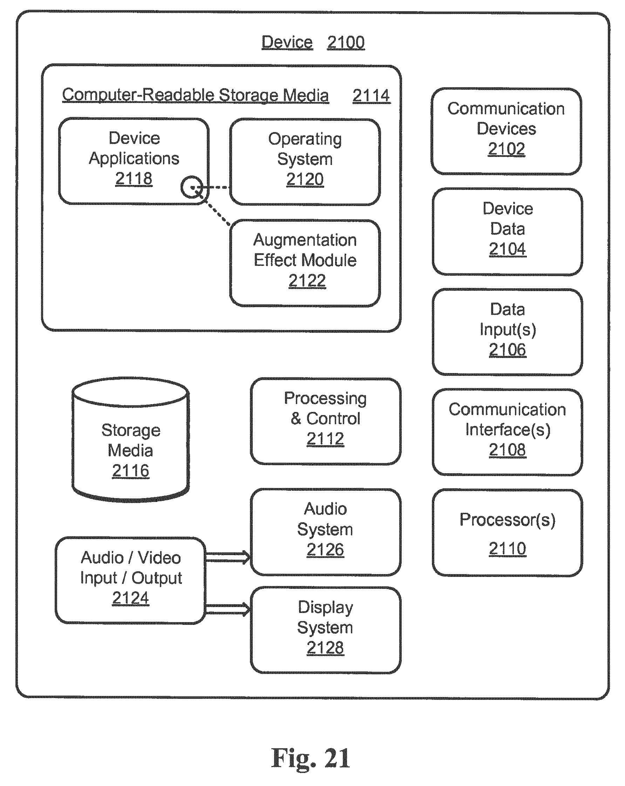

FIG. 21 illustrates various components of an example device 2100 that can be implemented as any type of portable and/or computer device as described with reference to FIGS. 1 and 2 to implement embodiments of the data heuristics engine described herein. Device 2100 includes communication devices 2102 that enable wired and/or wireless communication of device data 2104 (e.g., received data, data that is being received, data scheduled for broadcast, data packets of the data, etc.). The device data 2104 or other device content can include configuration settings of the device, media content stored on the device, and/or information associated with a user of the device. Media content stored on device 2100 can include any type of audio, video, and/or image data. Device 2100 includes one or more data inputs 2106 via which any type of data, media content, and/or inputs can be received, such as user-selectable inputs, messages, music, television media content, recorded video content, and any other type of audio, video, and/or image data received from any content and/or data source.

Device 2100 also includes communication interfaces 2108 that can be implemented as any one or more of a serial and/or parallel interface, a wireless interface, any type of network interface, a modem, and as any other type of communication interface. The communication interfaces 2108 provide a connection and/or communication links between device 2100 and a communication network by which other electronic, computing, and communication devices communicate data with device 2100.

Device 2100 includes one or more processors 2110 (e.g., any of microprocessors, controllers, and the like) which process various computer-executable or readable instructions to control the operation of device 2100 and to implement the embodiments described above. Alternatively or in addition, device 2100 can be implemented with any one or combination of hardware, firmware, or fixed logic circuitry that is implemented in connection with processing and control circuits which are generally identified at 2112. Although not shown, device 2100 can include a system bus or data transfer system that couples the various components within the device. A system bus can include any one or combination of different bus structures, such as a memory bus or memory controller, a peripheral bus, a universal serial bus, and/or a processor or local bus that utilizes any of a variety of bus architectures.

Device 2100 also includes computer-readable storage media 2114, such as one or more memory components, examples of which include random access memory (RAM), non-volatile memory (e.g., any one or more of a read-only memory (ROM), flash memory, EPROM, EEPROM, etc.), and a disk storage device. A disk storage device may be implemented as any type of magnetic or optical storage device, such as a hard disk drive, a recordable and/or rewriteable compact disc (CD), any type of a digital versatile disc (DVD), and the like. Device 2100 can also include a mass storage media device 2116. Computer readable storage media is intended to refer to statutory forms of media. As such, computer readable storage media does not describe carrier waves or signals per se.

Computer-readable storage media 2114 provides data storage mechanisms to store the device data 2104, as well as various device applications 2118 and any other types of information and/or data related to operational aspects of device 2100. For example, an operating system 2120 can be maintained as a computer application with the computer-readable storage media 2114 and executed on processors 2110. The device applications 2118 can include a device manager (e.g., a control application, software application, signal processing and control module, code that is native to a particular device, a hardware abstraction layer for a particular device, etc.), as well as other applications that can include, web browsers, image processing applications, communication applications such as instant messaging applications, word processing applications and a variety of other different applications. The device applications 2118 also include any system components or modules to implement embodiments of the techniques described herein. In this example, the device applications 2118 include augmentation effect module 2122 that is shown as software modules and/or computer applications. Augmentation effect module 2122 is representative of software that operates as described above. Alternatively or in addition, augmentation effect module 2122 can be implemented as hardware, software, firmware, or any combination thereof.

Device 2100 also includes an audio and/or video input-output system 2124 that provides audio data to an audio system 2126 and/or provides video data to a display system 2128. The audio system 2126 and/or the display system 2128 can include any devices that process, display, and/or otherwise render audio, video, and image data. Video signals and audio signals can be communicated from device 2100 to an audio device and/or to a display device via an RF (radio frequency) link, S-video link, composite video link, component video link, DVI (digital video interface), analog audio connection, or other similar communication link. In an embodiment, the audio system 2126 and/or the display system 2128 are implemented as external components to device 2100. Alternatively, the audio system 2126 and/or the display system 2128 are implemented as integrated components of example device 2100.

### Conclusion

Various embodiments provide an interactive, shared, story-reading experience in which stories can be experienced from remote locations. Various embodiments enable augmentation or modification of audio and/or video associated with the story-reading experience. This can include augmentation and modification of a reader's voice, face, and/or other content associated with the story as the story is read.

In this manner, two or more remote participants can communicate and interact with story-based shared, interactive content in real-time. Alternately or additionally, story-based shared, interactive content can be augmented or modified and recorded and/or archived for subsequent playback.

Although the embodiments have been described in language specific to structural features and/or methodological acts, it is to be understood that the embodiments defined in the appended claims are not necessarily limited to the specific features or acts described. Rather, the specific features and acts are disclosed as example forms of implementing the claimed embodiments.

## Claims

1. A computing device comprising:
one or more processors;
one or more computer readable storage media;
an augmentation effect module embodied on the one or more computer readable storage media and configured to be executed, by the one or more processors, effective to implement a method comprising:
capturing a gestural input associated with an electronic story that is being shared with one or more remove participants;
responsive to capturing the gestural input, mapping the gestural input to an augmentation effect;
augmenting one or more properties or characteristics of electronic story using the augmentation effect; and
enabling the one or more remote participants to consume electronic story as augmented.

2. The computing device of claim 1, wherein the gestural input comprises a non-touch-based input.

3. The computing device of claim 1, wherein the gestural input comprises a touch-based input.

4. The computing device of claim 1, wherein said augmenting comprises augmenting a voice of a reader of the electronic story.

5. A computer implemented method comprising:
capturing a gestural input associated with an electronic story that is being shared with one or more remote participants;
responsive to capturing the gestural input mapping the gestural input to an augmentation effect;
augmenting one or more properties or characteristics of electronic story using the augmentation effect; and
enabling the one or more remote participants to consume electronic story as augmented.

6. The method of claim 5, wherein the gestural input comprises a non-touch based input.

7. The method of claim 5, wherein the gestural input comprises a touch based input.

8. The method of claim 5, wherein the augmenting comprises augmenting a voice of a reader of the electronic story.

9. The method of claim 5, wherein the augmentation effect comprises augmenting the reader's voice and/or video associated with the story.

10. A computer program product comprising computer instructions stored on computer readable storage media which, when executed by one or more processors are effective to implement the method of any of claims 5 to 8.
